(19) Europäisches Patentamt
European Patent Office
Office européen des brevets

(11) **EP 2 548 912 A1**

(12) **EUROPEAN PATENT APPLICATION**
published in accordance with Art. 153(4) EPC

(43) Date of publication:
**23.01.2013 Bulletin 2013/04**

(21) Application number: **11756002.9**

(22) Date of filing: **08.02.2011**

(51) Int Cl.:
***C08J 5/18*** *(2006.01)* ***B82B 1/00*** *(2006.01)*
***B82B 3/00*** *(2006.01)* ***C08K 3/08*** *(2006.01)*
***C08L 79/08*** *(2006.01)* ***C08L 101/00*** *(2006.01)*
***G01N 21/27*** *(2006.01)*

(86) International application number:
**PCT/JP2011/052608**

(87) International publication number:
**WO 2011/114812 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 JP 2010082409**
**19.03.2010 JP 2010064097**

(71) Applicant: **Nippon Steel Chemical Co., Ltd.**
**Chiyoda-ku**
**Tokyo 101-0021 (JP)**

(72) Inventors:
- **MATSUMURA Yasufumi**
**Kisarazu-shi**
**Chiba 292-0835 (JP)**
- **SHINTA Ryuzo**
**Kisarazu-shi**
**Chiba 292-0835 (JP)**
- **ENOMOTO Yasushi**
**Kisarazu-shi**
**Chiba 292-0835 (JP)**

(74) Representative: **Becker Kurig Straus**
**Patentanwälte**
**Bavariastrasse 7**
**80336 München (DE)**

# (54) METAL MICROPARTICLE COMPOSITE

(57) A metal microparticle composite is provided, which includes a film-shaped matrix resin and metal microparticles immobilized in the matrix resin. The metal microparticles are obtained by reducing metal ions or metal salts, and the particle diameters of at least 90% of all the metal microparticles are in the range of 10 nm to 80 nm. The metal microparticles that are dispersed in a plane direction parallel to the matrix resin surface in a range of depth within 150 nm from the matrix resin surface to form a metal microparticle layer, and only one metal microparticle having the diameter described is present in the direction of depth in the metal microparticles layer. The spacing between adjacent metal microparticles is greater than and equal to the particle diameter of the larger one of the adjacent metal microparticles.

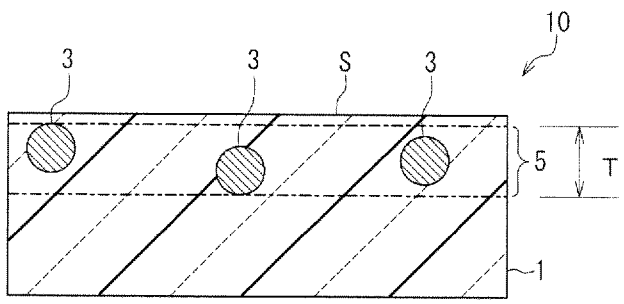


FIG. 1

EP 2 548 912 A1

## Description

BACKGROUND OF THE INVENTION

1. Field of the Invention

The present invention relates to a metal microparticle composite applicable to, for example, various devices that use surface plasmon resonance (SPR).

2. Description of Related Art

Local surface plasmon resonance (LSPR) is a resonance phenomenon due to an interaction between electrons in metal microparticles or metal microstructures having a size of several nanometers to 100 nm and light of a specific wavelength. Since a long time ago, LSPR has been used in stained glass which exhibits bright colors by mixing metal microparticles in a glass. In recent years, in the industry, researches have been conducted on developing high-power light-emitting lasers which utilize enhanced light intensity and on applications such as biosensors which utilize the resonance state change property when molecule bonding occurs.

In order to apply such LSPR of metal microparticles to sensors, metal microparticles should be immobilized in a matrix such as a synthetic resin. However, if the metal microparticles are on a nanometer scale, the aggregation and dispersion characteristics change, for example, the stable dispersion due to an electrostatic repulsion effect becomes difficult, and aggregation is likely to occur. Therefore, for plasmon devices that use LSPR, it is essential to homogenously disperse the metal microparticles in the matrix.

For example, the following Patent Documents 1 to 6 set forth technologies of metal microparticle composites for immobilizing metal microparticles in matrixes such as resin. In Patent Document 1, with a high-elastic modulus polymer composite material due to a small particle size, a good dispersion characteristic of particles and good adherence of particles to the matrix, a polymer-metal cluster composite with improved elastic modulus formed by filling metal particles in a thermoplastic or thermosetting polymer matrix is disclosed, where particle diameters of the metal particles are 10 angstroms to 20 angstroms, and the metal particles are uniformly dispersed with a volume fraction of 0.005% to 0.01%. However, in the polymer-metal cluster composite in Patent Document 1, metal microparticles are dispersed to improve the elastic modulus, and as a result, the particle diameters are too small to be applied in generating plasmon resonance.

Patent Document 2 has disclosed a production method of a metal microparticle dispersion for forming a novel conductive coating that can substitute the electroless plating method or applied to a granular magnetic film by reducing microparticle dispersion in a gaseous phase after a resin substrate containing an ion exchange site contacts with a solution containing metal ions. In this method, during the hydrogen reduction, metal ions are dispersed in the resin while reacting; therefore, no metal microparticle is present in a region from the surface of the resin substrate to a depth of tens of nanometers (which is 80 nm in the example of Patent Document 2). Although this feature provides an advantage that no protection film is needed when the magnetic film is formed by using magnetic microparticles because the metal microparticles are embedded in the depth of the matrix, the feature sometimes becomes a disadvantage when being implemented. In addition, as disclosed in Patent Document 2, through the heat-reduction in a hydrogen atmosphere, the metal microparticles precipitated through reduction become a catalyst for promoting thermal decomposition of the resin matrix caused by hydrogen, and sometimes contraction of the resin matrix occurs. That is, in Patent Document 2, control of the particle spacing between adjacent metal microparticles in the resin matrix is not taken into consideration.

Patent Document 3 has disclosed the following method: contacting a polyimide resin film with a liquid containing metal ions to dope metal ions in the resin film, where the polyimide resin film has been processed by an alkaline aqueous solution to introduce a carboxyl group into the polyimide resin film; after that, at a temperature higher than the reduction temperature of the metal ions, performing a first heat treatment in a reducing gas, so as to form a layer which is a polyimide resin dispersed with metal nanoparticles; and further performing a second heat treatment at a temperature different from that of the first heat treatment. Patent document 3 has documented that the volume fill ratio of the metal microparticles in the composite film may be controlled by adjusting the thickness of the metal microparticle dispersion layer through the second heat treatment. Patent Document 3 has documented the following situation: through the heat treatment in the reducing gas, metal ions that are bonded or adsorbed in a region from a surface of the polyimide resin film to a depth of several micrometers are dispersed in the resin film while participating in the reduction reaction. Therefore, the metal microparticles are uniformly dispersed in the resin matrix within a region from the surface of the resin film to a depth from tens of nanometers to several micrometers, and no metal microparticle is present near the surface. Like the feature in Patent Document 2, this feature also becomes a disadvantage sometimes when being implemented. In addition, similar to the technology in Patent Document 2, the technology in Patent Document 3 does not provide the consideration of controlling of the particle spacing between adjacent metal microparticles in the resin matrix.

Patent Document 4 and Patent Document 5 have disclosed a heat sensitive color-developing element using a

solid matrix, wherein micro metal microparticles that irreversibly grow by means of temperature change are dispersed in the solid matrix through plasmon resonance. The technology of Patent Documents 4 and 5 is under the premise that the micro metal microparticles are aggregated by means of temperature change, and the particle diameter is increased to generate plasmon attraction; metal microparticles are independently dispersed into the matrix, while controlling over the spacing between adjacent microparticles is not taken into consideration.

Patent Document 6 has disclosed a method for photo-reducing a metal precursor through exposure to ultraviolet rays after the metal precursor is dispersed into a matrix of polymer substance at a molecular level during a process of dispersing metal particles into the polymer matrix, so as to solve problems such as intermiscibility with the polymer matrix, interface defects and cohesion among particles. However, in the method of Patent Document 6, the metal microparticles are precipitated through reduction by using ultraviolet rays, so due to the influence of an ultraviolet radiation surface, a gradient concerning precipitation density of the metal microparticles is generated from a surface portion to a deep portion of the matrix. That is, from the surface portion to the deep portion of the matrix, the particle diameters and the fill ratio of the metal microparticles tend to decline consecutively. In addition, although the particle diameters of the metal microparticles obtained through photo-reduction are the greatest at the ultraviolet radiation surface, namely, the surface portion of the matrix, the particle diameters are a few ten nanometers at most. In addition, it is difficult to control the particle spacing between the metal microparticles generated by photo-reduction.

In addition, in sensors that use plasmon resonance in the prior art, because metal plasmon is highly sensitive to variation of refractive index of an interface material, ligand molecules that has specific interactions with detection object molecules (an analyte) are immobilized on a surface of a metal film or metal microparticles of gold or silver by chemical or physical means, and the concentration of the analyte is detected. It is known that a SPR sensor that uses SPR may use, for example, a technology of forming a metal film through vacuum evaporation (as disclosed in Patent Document 7) or a technology of forming a metal film through sputtering (as disclosed in Patent Document 8). In addition, a sensor that uses LSPR may be, a sensor formed by monodispersing metal microparticles on a glass substrate of which a surface is modified with 3-aminopropyltriethoxysilane and immobilizing (as disclosed in Patent Document 9).

However, since the technologies in Patent Documents 7 and 8 uses the technology of metal film, the sensors that use surface plasmon resonance has the following disadvantages: in order to achieve high-precision sensing, an optical device such as a prism or a goniometer needs to be used additionally, so that miniaturization of devices cannot be realized, or simple sensing cannot be realized. As the technology in Patent Document 9 is merely to chemically immobilize metal microparticles on a glass substrate, the metal microparticles may fall off, resulting non-uniform distribution of the metal microparticles on the substrate. Therefore, in the technology in Patent Document 9, the intensity or sharpness of the absorption spectrum of analyte adsorbed on a receptor may be humidity sensor, and need to be improved.

Technical Documents of the Prior Art

Patent Document

Patent Document 1: Japanese Examined Patent Application Publication No. Hei 08-16177
Patent Document 2: Japanese Patent No. 3846331
Patent Document 3: Japanese Patent No. 4280221
Patent Document 4: Japanese Unexamined Patent Publication No. 2000-290642
Patent Document 5: Japanese Patent No. 2919612
Patent Document 6: Japanese Unexamined Patent Publication No. 2002-179931
Patent Document 7: Japanese Unexamined Patent Publication No. 2009-58263
Patent Document 8: Japanese Unexamined Patent Publication No. 2006-234472
Patent Document 9: Japanese Unexamined Patent Publication No. 2000-356587


## SUMMARY OF THE INVENTION

### Problem to be solved

When the metal microparticle composite with metal microparticles dispersed in the matrix is used in an LSPR sensor or for other purposes, it is essential that at least the intensity of the absorption spectrum is high. In addition, generally when the absorption spectrum is sharper, the detection is more sensitive. In order to obtain an intense and sharp absorption spectrum, the metal microparticle composite should have the following structural features:

1) The size of the metal microparticles is controlled in a specified range.
2) The shape of the metal microparticles is uniform.
3) Adjacent metal microparticles are separated from each other with a particle spacing therebeteen greater than and equal to a certain value.
4) The volume fill ratio of the metal microparticles relative to the metal microparticle composite is controlled within a certain range.
5) The metal microparticles are uniformly dispersed in a region from the surface portion of the matrix with a specified interparticle distance maintained in the thickness direction.

In addition, for example, in the use of a humidity sensor that the metal microparticles are exposed from the matrix surface and changes out of the matrix are detected according to changes of the absorption spectral distribution, it is important to fully meet the foregoing structural features, and to further make the metal microparticles easily exposed from the matrix surface. In such use, it is important to sense the changes of LSPR of the metal microparticles exposed from the matrix surface at a high sensitivity. On other hand, metal microparticles that are completely embeded in the matrix almost do not participate in sensing of the external changes, but during the sensing, absorption spectrum of that metal microparticles that do not participate in the sensing is observed at the same time, the sensitivity of the sensor is deceased due to the absorption spectrum.

## SUMMARY OF THE INVENTION

### Problem to be solved by the invention

The present invention is provided to solve the issues unsolved in the prior art, and is directed to a metal microparticle composite that can obtain an intense and sharp absorption spectrum through LSPR. In addition, the present invention is further directed to a metal microparticle composite that is highly sensive to externcal changes.

### Technical means to solve the problem

The inventors conducted researches on the foregoing actual situation, and found that: a metal microparticle composite produced by heat-reducing metal ions contained in a resin to precipitate metal microparticles meet the foregoing requirement, thereby completing the present invention.
A metal microparticle composite according to a first aspect of the present invention includes a film-shaped matrix resin and metal microparticles immobilized in the matrix resin, and has the following structures 1a to 1d:

1a) the metal microparticles are obtained by reducing metal ions or metal salts contained in the matrix resin or a precursor resin thereof;
1b) the particle diameters of at least 90% of all the metal microparticles are in the range of 10 nm to 80 nm;
1c) in a range from the matrix resin surface to a depth of 150 nm, a metal microparticle layer is formed by a plurality of metal microparticles dispersed in a plane direction parallel to the matrix resin surface, and in the metal microparticle layer, merely one metal microparticle with the particle diameter specified in 1b) is present in the depth direction; and
1d) a spacing between adjacent metal microparticles is greater than and equal to the particle diameter of the larger one of the adjacent metal microparticles.

In the metal microparticle composite according to the first aspect of the present invention, a volume fraction of the metal microparticles relative to the metal microparticle composite may be in the range of 0.05% to 23%.
In addition, the metal microparticle composite according to the first aspect of the present invention may further have the following structure 1e:

1e) the metal microparticles interact with light having a wavelength of greater than and equal to 380 nm, thereby generating LSPR.

In addition, in the metal microparticle composite according to the first aspect of the present invention, a part of the metal microparticles may be exposed from the matrix resin surface.
In addition, in the metal microparticle composite according to the first aspect of the present invention, the thickness of the metal microparticle layer may be in the range of 20 nm to 150 nm.
In addition, in the metal microparticle composite according to the first aspect of the present invention, the matrix resin may include a polyimide resin. In this case, the polyimide resin may be transparent or colorless.
In addition, a metal microparticle composite accordng to a second aspect of the present invention includes a

matrix resin and metal microparticles immobilized in the matrix resin. The metal microparticle composite has the following structures 2a to 2e:

2a) the metal microparticles are obtained by reducing metal ions or metal salts contained in the matrix resin or a precursor resin thereof;
2b) the particle diameters of the metal microparticles are in the range of 1 nm to 100 nm, and the mean particle diameter is greater than and equal to 3 nm;
2c) the metal microparticles do not contact with each ohter and are present with a adjacent of greater than and equal to the particle diameter of a greater one of the particle diameter of the adjacent metal microparticles;
2d) at least a part of the metal microparticles have a portion embeded in the matrix resin and a portion exposed out of the matrix resin, and the exposed portion has a bonded chemical species immobilized thereon; and
2e) the bonded chemical species that is immobilized on the metal microparticles has a functional group that can interact with a specific substance.

The particle diameters of at least 90% of the metal microparticle composite according to the second aspect of the present invention are in the range of 10 nm to 80 nm, in a range from the matrix resin surface to a depth of 100 nm, the metal microparticles that are dispersed in a plane direction parallel to the matrix resin surface to form a metal microparticle layer, and in the metal microparticle layer, merely one metal microparticle with the particle diameter in the range of 10 nm to 80 nm is present in the depth direction.
In addition, in the metal microparticle composite according to the second aspect of the present invention, the thickness of the metal microparticle layer may be in the range of 20 nm to 100 nm.
In addition, in the metal microparticle composite according to the second aspect of the present invention, the metal microparticles may interact with light having a wavelength of greater than and equal to 380 nm, thereby generating LSPR.
In addition, in the metal microparticle composite according to the second aspect of the present invention, the matrix resin may include a polyimide resin. In this case, the polyimide resin may be transparent or colorless.

Effect of the invention

In the metal microparticle composite according to the first aspect of the present invention, metal microparticles are reduced and precipitated from a state of metal ions (or metal salts) in the matrix resin (or a precursor resin thereof), to obtain the metal microparticle composite. Therefore, a composite containing nanometer-scale metal microparticles can be easily produced. Moreover, as the metal microparticles are dispersed and layered in the matrix resin with an interparticle distance greater than and equal to a certain value, The metal microparticle composite can be used in various sensors with humidity sensors as representative that are used to sense external changes, and achieve high-precision detection with a simple structure in these uses.
As the metal microparticle composite according to the second aspect of the present invention is obtained by reducing and precipitating metal microparticles in the matrix resin (or a precursor resin) from a state of metal ions (or metal salts), a composite containing nanometer-scale metal microparticles can be easily produced. Moreover, as the metal microparticles are dispersed in the matrix resin with an interparticle distance greater than and equal to a certain value, the LSPR absorption spectrum is sharp. In addition, as the metal microparticles are immobilized on the matrix resin, the metal microparticles will not fall off from the matrix, and metal microparticle composite may be applied to a surface of any shape including a curve surface. Moreover, as the metal microparticle composite according to the second aspect of the present invention has bonded chemical species that are immobilized on the metal microparticles, the metal microparticle composite is applied to sensors that utlize interaction of the bonded chemical species and a specific substance.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic cross-sectional structure view of a nanocomposite material according to a first embodiment of the present invention in the thickness direction.
FIG. 2 is a schematic cross-sectional structure view of the nanocomposite material in FIG. 1 in the plane direction.
FIG. 3 is a structural view of metal microparticles.
FIG. 4 is a schematic cross-sectional structure view of a nanocomposite material in another form in the thickness

direction.

FIG. 5 is a schematic cross-sectional structure view of a nanocomposite material accoridng to a second embodiment of the present invention in the thickness direction.

FIG. 6 is a structure view of metal microparticles.

FIG. 7 is a view illustrating that the nanocomposite material has a ligand bonded thereon.

FIG. 8 is a view illustrating that a ligand has an analyte specifically bonded thereon.

DESCRIPTION OF THE EMBODIMENTS

The embodiments of the present invention are described in detail below with suitable reference to the drawings.

First embodiment

First, a metal microparticle composite according to the first embodiment of the present invention and a production method thereof are described.

<Nanocomposite material >

FIG. 1 schematically shows a cross-section of a nanocomposite material dispersed with metal microparticles (referred to as "nanocomposite material" hereinafter after) 10 of a metal microparticle composite of this embodiment in the thickness direction. The nanocomposite material 10 includes a matrix resin 1 and metal microparticles 3 immoblized in the matrix resin 1. FIG. 2 schematically shows a a cross-section of the nanocomposite material 10 in the plane direction, and FIG. 3 is an amplified view of metal microparticles 3.

The nanocomposite material 10 may also have a substructe that is not shown in the figures. The substrate may be made by using glass, ceramic, silicon wafer, semiconductor, paper, metal, metal alloy, metal oxide, synthetic resin, organic/inorganic composite materials, and so on, and may be in a shape of plate, sheet, thin film, nest,geometric pattern, convex and concave, fiber, snake belly, multilayer, ball, and so on.. In addition, the surface of the substrate may undergo silane coupling agent treatment, chemical etching treatment, plasma treatment, alkali treatment, acid treatment, ozone treatment, ultraviolet treatment, electric grinding treatment, grinding treatment by using an abrasive, and so on.

<Matrix resin>

The matrix resin 1 may be formed to be a film shape as a whole, and may also be formed to be a part of the resin film. The metal microparticles 3 are dispersed in the plane direction parallel to a surface S of the matrix resin 1 (a surface of the nanocomposite material 10) to be a layer with a certain thickness, to form a metal microparticle layer 5. The thickness T of the metal microparticle layer 5 varies with the particle diameters D of the metal microparticles 3, but in applications of LSPR, the thickness T is prepferably in the range of 20 nm to 150 nm, and more preferably in the range of 30 nm to 120 nm. Herein, the so-called "thickness of the metal microparticle layer 5" refers to, as shown in FIG. 1, in the cross-section of the matrix resin 1 in the thickness direction, a thickness of a range from the upper end of the metal microparticles 3 (metal microparticles that have the particle diameter specified in 1b) that are located at the most top position (a side of surface S) to the lower end of the metal microparticles 3 (metal microparticles with the particle diameters specified in 1b) that are located at the most bottom position (deep part).

In addition, when the matrix resin 1 is formed to be a part of the resin film, the thickness of the resin film is preferably in the range of 3 μm to 100 μm, and more preferably in the range of 10 μm to 50 μm.

In order to produce SPR of the metal microparticles 3, the resin for forming the matrix resin 1 is preferably light-transmissive, and is more preferably a material that light with a wavelength of greater than and equal to 380 nm can penetrate. In such matrix resin 1, LSPR is set to be light-transmitting LSPR for measurement. On another hand, the resin that is almost non-light-transmissive may also be used as the matrix resin 1, and LSPR is set to be light-reflecting LSPR for measurement. In addition, a step of exposing a part of the metal microparticles 3 from the surfae S of the matrix resin 1 may be easily performed. In this aspect, the present invention is not limited to the light-transmitting LSPR and the light-reflecting LSPR, for example, the aspect may also be applied to a sensitivity sensor for sensing changes out of the matrix resin 1.

A resin material capable of using in the matrix resin 1 is not particularly limited, and may be, for example, a polyimide resin, a polyamic acid resin, Cardo resin (fluorene resin), a polysiloxane resin such as polydimethylsiloxane (PDMS), polyethylene terephthalate (PET) resin, a polyphenylene ether resin, an epoxy resin, a fluorine contained resin, a vinyl resin, a phenol resin, or an ion exchange resin, and among which, the resins having a functional group capable of interacting with the metal ions to form complexes with metal ions or adsorbing metal ions in a uniform dispersion state are preferred. The functional group may be, for example, carboxyl group, sulfonate group, quaternary ammonium group,

primary amino group and secondary amino group, and phenolic hydroxyl. From this point of view, the polyamic acid resin and ion exchange resin are preferred. In addition, as the metal microparticles 3 undergo heat treatment during precipitation, a heat-resistant material that can withstand a temperature of 140°C or higher is preferred. From this point of view, the polyamic acid resin, as a polyimide resin precursor, has a carboxyl group that can form a complex with metal ions, and can adsorb metal ions at a precursor stage; and furthermore, the polyamic acid resin has heat resistance against heat treatment, and is preferably used as the material of the matrix resin 1. Details of the polyimide resin and polyamic acid resin will be described below. In addition, the resin material may be a resin material containing a single type of resin, or a resin material containing a plurality of types of resins that are mixed.

<Metal microparticles>

In the nanocomposite material 10 according to this embodiment, the metal microparticles 3 meet the following requirements 1 a) to 1d).

1a) The metal microparticles 3 are obtained by heat-reducing metal ions or metal salts contained in the matrix resin 1 or a a precursor resin layer thereof. The heat-reduction method may include pho-reduction or heat-reduction, but in view of the ease in controlling the particle spacing between the metal microparticles 3, the metal microparticles 3 are preferably obtained through heat-reduction. The material of the metal microparticles 3 is not particularly limited, provided that the metal microparticles can be obtained in the foregoing manner, and the material may be, for example, metal species such as gold (Au), silver (Ag), copper (Cu), cobalt (Co), nickel (Ni), palladium (Pd), platinum (Pt), tin (Sn), rhodium (Rh), and iridium (Ir). In addition, an alloy of these metal species (such as platinum-cobalt alloy) may also be used. Among these metal species, especially metal species that can produce LSPR, for example, gold (Au), silver (Ag), copper (Cu), palladium (Pd), platinum (Pt), tin (Sn), rhodium (Rh), and iridium (Ir), are preferred.

The metal microparticles 3 may be in various shapes such as a ball, an ellipsoid, a cube, a truncated tetrahedron, a weight bicornis, an octahedron, a decanedron and an icosahedron, with a ball shape that can make the absorption spectrum of the LSPR sharp being preferred. Herein, the shape of the metal microparticles 3 may be confirmed through observation by using a transmission electron microscope (TEM). Moreover, the mean particle diameter of the metal microparticles 3 is set to a measured area mean diameter of any 100 metal microparticles 3. In addition, the so-called spherical metal microparticles 3 are metal microparticles in shapes of balls or close to balls, and refer to metal microparticles with a ratio of a mean long diameter to a mean short diameter being 1 or close to 1 (and preferably higher than 0.8). Besides, the relationship between the long diameter and short diameter of the metal microparticle 3 is preferably satisfying the formula of the long diameter < the short diameter $\times$1.35, and is more preferably satisfying the formula of the long diameter $\leqq$ the short diameter $\times$ 1.25. In addition, when the metal microparticles 3 are not in the shape of a ball (for example, the metal microparticles 3 are in the shape of an octahedron), the length of a longest edge of the metal microparticle 3 is set to be the long diameter of the metal microparticle 3, and the length of a shortest edge is set to be a short diameter of the metal microparticle 3, where the long diameter is regarded as the particle diameter D of the metal microparticle 3.

1b) The particle diameters (D) of at least 90% of all the metal microparticles 3 are in the range of 10 to 80 nm. In order to effectively obtain LSPR effect produced by the metal microparticles 3 distributed in a single layer, the particle diameters D of the metal microparticles 3 are preferably greater than and equal to 10 nm. When the particle diameters D are less than 10 nm, the intense of the LSPR absorption spectrum tends to reduced. In addition, the smaller the particle diameter distribution of the metal microparticles 3 is, the sharper the wave peak of the LSPR absorption spectrum is. Therefore, the particle diameter distribution of the metal microparticles 3 is preferably controlled to be small. From this point of view, in the particle diameter distribution of the metal microparticles 3, the relationship between the largest particle diameter (Dmax) and the smallest particle diameter (Dmin) is preferably $(1/3 \times \mathrm{Dmax}) \leq (1 \times \mathrm{Dmin})$. In addition, as the particle diameters D of the metal microparticles 3 are closely associated with the thickness (T) of the metal microparticle layer 5, the relationship between the thickness T (nm) of the metal microparticle layer 5 and the largest particle diameter Dmax is preferably $(1/2 \times T) \leq (1 \times \mathrm{Dmax})$.

The nanocomposite material 10 may also include metal microparticles 3 with the particle diameters D of less than 10 nm, for example, when a cross-section of the matrix resin 1 is observed by using a TEM, the present ratio of the metal microparticles 3 with the particle diameters D in the range of 1 nm to 10 nm is preferably less than 10%, and more preferably less than 5%, and further more preferably less than 1%, relative to all the metal microparticles 3 in the nanocomposite material 10. Herein, the so-called present ratio refers to a value obtained by dividing a total cross-sectional area of metal microparticles 3 with the particle diameters D in the range of 1 nm to 10 nm by a total cross-sectional area of all the metal microparticles 3. From another point of view, when a cross-section parallel to the surface S of the matrix resin 1 is observed, all the observed metal microparticles 3 are completely independently is the best aspect of the nanocomposite material 10; however, when metal microparticles 3 with the particle diameters D of less then 10 nm are present, apparent overlapping of metal microparticles 3 in the thickness direction of the nanocomposite material 10 is confirmed. In this case, relative to the total cross-sectional area of all the observed metal microparticles,

the ratio of the total cross-sectional area of the metal microparticles 3 that are observed to be completely independently is preferably greater than and equal to 90%, and more preferably greater than and equal to 95%, and further more preferably greater than and equal to 99%. By setting the above ranges, for example, in the use of detecting changes out of the matrix resin 1, changes in LSPR of the metal microparticles 3 that exposed of the surface S of the matrix resin 1 can be effectively sensed.

In addition, the nanocomposite material 10 may also include metal microparticles 3 with the particle diameters D of less than 1 nm, because such nanocomposite material 10 have no influence on LSPR, no specific problem occurs. In addition, based on 100 parts by weight of the total weight of the metal microparticles 3 in the nanocomposite material 10, for example, when the metal microparticles 3 are silver microparticles, the amount of the metal microparticles 3 with the particle diameters D of less than 1 nm is preferably set to be less than and equal to 10 parts by weight, and more preferably less than and equal to 1 parts by weight. Herein, the metal microparticles 3 with the particle diameters D of less than 1 nm may be detected by using an X-ray photoelectron spectroscope (XPS) analyzer or an energy dispersive X-ray (EDX) analyzer.

1 c) In the range from the surface S of the matrix resin 1 to a depth of 150 nm, a plurality of metal microparticles 3 are dispersed in the plane direction parallel to the surface S to form a metal microparticle layer 5, and in the metal microparticle layer 5, merely one the metal microparticle 3 with the particle diameter specified in 1b) is present in the depth direction. That is, when the cross-section parallel to the surface S of the matrix resin 1 in the nanocomposite material 10 is observed, as shown in FIG. 2, it is observed that a large amount of the metal microparticles 3 with the particle diameters D in the range of 10 nm to 80 nm are distributed in matrix resin 1 (or the surface S) with an interparticle distance L, and moreover, when a cross-section in the depth direction of the matrix resin 1 is observed, as shown in FIG. 1, in the range of the metal microparticle layer 5, a large amount of metal microparticles 3 with the particle diameters D in the range of 10 nm to 80 nm are completely independently distributed in a single layer (although positions of some metal microparticles 3 are not aligned, the positions are substantially in a column). Moreover, in the metal microparticle layer 5, the metal microparticles 3 with the particle diameters specified in 1b) at not overlapped in the depth direction at least. In addition, the interparticle distance L is described in the following. A method for observing such a state shown in FIG. 2 may use a scanning electron microscope (SEM) with a sputtering function.

1d) The spacing (interparticle distance) L between adjacent metal microparticles 3 is greater than and equal to a particle diameter $D_L$ of a larger one of the adjacent metal microparticles 3, that is, $L \geq D_L$. In addition, the relationship between the particle diameter $D_L$ of the larger one of the adjacent metal microparticles 3 and a particle diameter of the smaller one of the adjacent metal microparticles 3 is $D_S$ satisfy the relationship of $D_L \geq D_S$. When the interparticle distance L is less than the particle diameter $D_L$ of the larger metal microparticle, particles may interfere with each other when the LSPR is generated, for example, two particles move together like a larger particle and generate LSPR, so that a sharp absorption spectrum cannot be obtained. On another hand, even if the interparticle distance L is large, no specific problem occurs; however, as the interparticle distance L among the metal microparticles 3 that are dispersed by means of thermal diffusion is closely associated with the particle diameters D of the metal microparticles 3 and the volume fraction of the metal microparticles 3, an upper limit of the interparticle distance L is preferably controlled according to a lower limit of the volume fraction of the metal microparticles 3. When the interparticle distance L is large, that is to say, when the volume fraction of the metal microparticles 3 relative to the nanocomposite material 10 is low, the intensity of the LSPR absorption spectrum is reduced. In this case, relative to all the metal microparticles, for example, the present ratio of the metal microparticles 3 with the particle diameters D of greater than and equal to 50 nm in the nanocomposite material 10 is preferably set to be higher than 90%, and more preferably higehr than 95%, and further more preferably set to be higher than 99%, so as to improve the intensity of the LSPR absorption spectrum. Herein, the so-called present ratio refers to a value obtained by dividing a total cross-sectional area of metal microparticles 3 with the particle diameters D of greater than and equal to 50 nm by a total cross-sectional area of all the metal microparticles 3.

In addition, at least 95% of the metal microparticles 3 with the particle diameters D in the range of 10 to 80 nm are preferably single particles distributed with the interparticle distance L of greater than and equal to the particle diameter $D_L$. Herein, the so-called "single particle" herein refers to the metal nanoparticles 3 in the matrix resin layer 1 being present independently, and not a plurality of particles coagulated together (coagulated particles). That is, the so-called single particle does not include any coagulated particle in which a plurality of metal microparticles is coagulated by means of an intermolecular force. In addition, the so-called "coagulated particle" refers to a particle that is formed by coagulating a plurality of individual metal microparticles can be clearly observed by using, for example, a TEM. In addition, the chemical structure of the metal microparticles 3 in the nanocomposite material 10 can also be illustrated as metal microparticles formed by coagulating metal atoms that are generated through heat-reduction; however, it is generally considered that the metal microparticles are formed through metal bonds of metal atoms, so as to be distinguished from the coagulated particles formed by coagulating a plurality of particles, for example, when being observed by using a TEM, the metal microparticles are identified as independent metal microparticles 3.

Since at least 95% of the metal microparticles are single particles, the LSPR absorption spectrum is sharp and stable, thereby obtaining a high detection precision. In other words, this situation refers to that the coagulated particles

or the particles dispersed with the interparticle distance L of less than and equal to the particle diameter $D_L$ accounts for less than 5%. When such particles exceed 5%, the LSPR absorption spectrum becomes wider or unstable, and in use such as sensors, it is difficult to obtain a high detection precision. In addition, if the coagulated particles or the particles dispersed with the interparticle distance L of less than and equal to the particle diameter $D_L$ accounts for at least 5%, it is extremely difficult to control the particle diameter D.

In addition, relative to the nanocomposite material 10, the volume fraction of the metal microparticles in the nanocomposite material 10 is preferably set to be 0.05% to 23%. Herein, the so-called "volume fraction" refers to a value in percentage that indicates a ratio of a total volume of the metal microparticles 3 to a certain volume of the nanocomposite material 10. If the voluem fraction of the metal microparticles 3 is less than 0.05%, the intensity of the LSPR absorption spectrum is very low, and it is difficult to achieve the effect of the present invention. On another hand, if the volume fraction exceeds 23%, the spacing (interparticle distance L) between the adjacent metal microparticles 3 adjacent metal microparticles 3 is less than the particle diameter $D_L$ of a larger one of the adjacent metal microparticles 3, so it is difficult to obtain a sharp peak of the LSPR absorption spectrum.

In the nanocomposite material 10 of this embodiment, besides the requirements 1a) to 1d), the metal microparticles 3 preferably further satisfy the requirement 1e). That is, 1e) the metal microparticles 3 interact with light to generate LSPR. A wavelent range for generating the LSPR varies algong with the particle diameters D, the particle shapes, the metal species, and the interparticle distance L of the metal microparticles 3, and the reflective index of the matrix resin. Preferably, light with a wavelength of greater than and equal to 380 nm is used to cause the LSPR.

<Application example of the nanocomposite material>

In FIG. 1, the metal microparticles 3 are embeded in the matrix resin 1, when a surface layer of the matrix resin 1 is stripped off through, for example, etching, a new surface S is exposed from a part of the matrix resin 1, to form the nanocomposite material 10a shown in FIG. 4. In this state, a lower portion of the metal microparticle 3 is embedded in the matrix resin 1 for immobilization, and an upper portion of the metal microparticle 3 is exposed from the surface S of the matrix resin 1 to form a exposed portion 3a. By setting nanocomposite material to this form, for example, a shift of the absorption spectrum accompanying the variation of the exposed portion of the metal microparticles 3 can be detected. By using this function, the refractive index of a medium can be detected, and adsorption and accomulation of a substance in the metal microparticles 3. In addition, in this embodiment, since the matrix resin 1 is film-shaped (or formed to be a part of the resin film), the matrix resin 1 may be applied to a surface of any shape including a curve surface.

In the nanocomposite material 10 of this embodiment having the foregoing structures, the metal microparticles 3 are uniformly dispersed in in the matrix resin 1 with an interparticle distance greater than and equal to a certain value L. Therefore, the LSPR absorption spectrum is sharp and very stable, and the reproducibility and reliability are excellent. Therefore, the nanocomposite material 10 is applicable to various sensing devices such as a biosensor, a chemical sensor, a Surface Enhanced Raman Scattering (SERS) sensor, a Surface-enhanced Infrared Absorption (SEIRA) sensor, and a Near Field Scanning Optical Microscope (NSOM) sensor. By applying the nanocomposite material 10 to sensing devices, high-precision detection can be performed with a simple structure. In addition, the nanocomposite material 10 can also be applied to other plasmon devices such as a photonic crystal device, an optical recording/playing device, an optical information processing device, an energy enhancement device, and a high-sensitivity photodiode.

In addition, the nanocomposite material 10 is not only applicable to the field of use of the local surface plasmon effect, but also applicable to various industrial fields such as electromagnetic shielding materials, magnetic noise-absorbing materials and high-thermal conductivity resin materials.

<Production method>

Next, a production method of the nanocomposite material 10 according to this embodiment is described. The produciton of the nanocomposite material 10 includes (1) a step of forming a resin film containing metal ions (or metal salts); (2) a reduiton step; and an etching step (3) as an optional step. Herein, the matrix resin 1 including a polyimide resin containing is taken as an example for exemplary description.

(1) Step of forming the resin film containing metal ions (or metal salts)

First, a polyamic acid resin (or polyamic acid resin layer) containing metal ions (or metal salts) is prepared. The polyamic acid resin film (or polyamic acid resin layer) containing metal ions (or metal salts) may be prepared through the following film casting method or alkali modification method.

Film casting method

Film casting method is a method of casting a polyamic acid resin solution containing a polyamic acid resin on any substrate to form a polyamic acid resin film, and the polyamic acid resin film containing metal ions (or metal salts) may be formed through any one of the following methods (I) to (III):

(I) a method of casting a coating solution containing polyamic acid and a metal compound on any substrate to form a polyamic acid resin film containing metal ions (or metal salts);
(II) a method of casting a polyamic acid resin solution free of any metal ions (or metal salts) on any substrate to form a polyamic acid resin film, and impregnating the polyamic acid resin film in a solution containing metal ions (or metal compounds) (recorded as metal ion solution hereinafter); and
(III) a method of impregnating the polyamic acid resin film containing metal ions (or metal salts) formed by the method (I) in the metal ion solution.

Form the consideration of easily controlling the thickness of the metal microparticle layer 5 or the matrix resin 1, and making appliction easily due to not particularly limited the chemical structure of the polyimide resin, the film casting method is more preferable than the following alkali modification method.

The method (I) has the following advantage: the content of the metal compound in the polyamic acid resin solution can be easily adjusted, and therefore, the metal content in the nanocomposite material 10 can be easily adjusted; or the nanocomposite material 10 containing larger metal microparticles 3 with the particle diameters D of greater than and equal to 30 nm can be easily fabricated. That is, by adopting the method (I), the particle diameter D can be controlled in the range of 30 nm to 80 nm.

The method (II) has the following advantage: since the polyamic acid resin film is impregnated with the metal ions (or metal compounds) that are uniformly dissolved, and the metal ions (or metal salts) are uniformly dispersed in the polyamic acid resin film with less variation; so the nanocomposite material 10 containing the metal microparticles 3 with smaller particle diameter distribution can be fabricated.

When the nanocomposite material 10 is stripped from the substrate and applied to a sensor or when the substrate is attached with the nanocomposite material 10 and the light-reflecting LSPR is used, the substrate used in the film casting method is not particularly limited. When the substrate is attached with the nanocomposite material and the light-reflecting LSPR is used, the substrate is preferably light-transmissive, and may be, for example, a glass substrate or a substrate made of a transparent sysnthetic resin. The transparent sysnthetic resin may be, for example, a polyimide resin, a PET resin, an acrylic acid resin, Methyl methacrylate-Styrene (MS) resin, Methyl methacrylate-Butadiene-Styrene (MBS) resin, Acrylonitrile-Butadiene-Styrene (ABS) resin, a polycarbonate resin, a siloxane resin, and an epoxy resin.

The well-known polyamic acid resin obtained from well-known anhydride and diamine may be used a polyimide resin precursor, namely, polyamic acid resin (referred to as "precursor"). The polyamic acid may be obtained by dissolving, for example, an substantial equimolar amount of tetracarboxylic dianhydride and diamine in an organic solvent, and stirring for about 30 minutes to 24 hours at a temperature in the range of 0°C to 100°C for polymerization. During the reaction, the obtained polyamic acid resin is preferably in the range of 5 wt% to 30 wt% in the organic solvent, and more preferably in the range of 10 wt% to 20 wt% to dissolve the reaction components. The organic solvent used in the polymerization is preferably a polar organic solvent, and may be, for example, N,N-dimethylformamide, N,N-dimethylacetyl acetamide (DMAc), N-methyl-2-pyridinone, 2-butanone, dimethylsufoxide, dimethyl sulfate, cyclohexanone, dioxane, tetrahydrofuran, diethylene glycol dimethyl ether , triethylene glycol dimethyl ether. Two or more of the solvents may be used in combination; and in addition, some aromatic hydrocarbons such as xylene and toluene may be used.

The synthesized polyamic acid resin is made into a solution for use, and preferably, made into a reaction solvent solution for use, which may be optionally concentrated, diluted or replaced by other organic solvents. The solution adjusted in this manner may be used as a coating solution after the metal compound is added.

The polyamic acid resin is preferably selected to enable the imidized polyimide resin to contain a thermoplastic or low-thermal expansion polyimide resin. Besides, the polyimide resin may include, for example, a heat-resistant resin containing a polymer having an imide group in the structure, such as polyimide, polyamide imide, polybenzimidazole, polyimide ester, polyether imide, and polysiloxane imide.

Preferably, diamine used for preparing the polyamic acid resin may be, for example, 2,2'-bis(trifluoromethyl)-4,4'-diaminodiphenyl, 4,4'-diaminodiphenyl ether, 2'-methoxyl-4,4'-diaminobenzoylaniline, 1,4-bis(4-aminophenoxy) benzene, 1,3-bis(4-aminophenoxy)benzene, 2,2-bis[4-(4-aminophenoxy)phenyl]propane, 2,2'-dimethyl-4,4'-diaminodiphenyl, 3,3'-dyhydroxyl-4,4'-diaminodiphenyl, and 4,4'-diaminobenzoylaniline. In addition, preferably, the dimine may be, for example, 2,2-bis[4-(3-aminophenoxy)phenyl]propane, bis[4-(4-aminophenoxy)phenyl]sulphone, bis[4-(3-aminophenoxy)phenyl]sulphone, bis[4-(4-aminophenoxy)]biphenyl, bis[4-(3-aminophenoxy)biphenyl, bis[1-(4-aminophenoxy)]biphenyl, bis[1-(3-aminophenoxy)]biphenyl, bis[4-(4-aminophenoxy)phenyl]methane, bis[4-(3-aminophenoxy) phenyl]methane, bis[4-(4-aminophenoxy)phenyl]ether, bis[4-(3-aminophenoxy)phenyl]ether, bis[4-(4-aminophenoxy)]benzophenone, bis[4-(3-aminophenoxy)]benzophenone, bis[4,4'-(4-aminophenoxy)]benzanilide, bis[4,4'-(3-aminophenoxy)]benzanilide, 9,9-bis[4-(4-aminophenoxy)phenyl]nuorene, and 9,9-bis[4-(3-aminophenoxy)phenyl]fluorene.

Other types of diamine may be, for example, 2,2-bis-[4-(4-aminophenoxy)phenyl]hexafluoropropane, 2,2-bis-[4-(3-aminophenoxy)phenyl]hexafluoropropane, 4,4'-methylenedi-o-toluidine, 4,4'-methylenebis(2,6-dimethylaniline), 4,4'-methylene-2,6-diathylanilin, 4,4'-diaminodiphenylpropane, 3,3'-diaminodiphenylpropane, 4,4'-diaminodiphenylethane, 3,3'-diaminodiphenylethane, 4,4'-diaminodiphenylmethane, 3,3'-diaminodiphenylmethane, 4,4'-diaminodiphenylthioether, 3,3'-diaminodiphenylthioether, 4,4'-diaminodiphenylsulphone, 3,3'-diaminodiphenylsulphone, 4,4'-diaminodiphenyl ether, 3,3-diaminodiphenyl ether, 3,4'-diaminodiphenyl ether, benzidine, 3,3'-diaminodiphenyl, 3,3'-dimethyl-4,4'-diaminodiphenyl, 3,3'-dimethoxybenzidine, 4,4"-diamino-p-terphenyl, 3,3"-diamino-p-terphenyl, m-phenylenediamine, p-phenylenediamine, 2,6-diaminopyridine, 1,4-bis(4-aminophenoxy)benzene, 1,3-bis(4-aminophenoxy) benzene, 4,4'-[1,4-phenylenebis(1-methylethylidene)]dianiline, 4,4'-[1,3-phenylenebis(1-methylethylidene)]dianiline, bis(4-amino-cyclohexyl)methane, bis(p-β-amido-t-butylphenyl)ether, 1,4-bis(β-methyl-δ-aminopentyl)benzene, 1,4-bis (2-methyl-4-aminopentyl)benzene, 1,4-bis(1,1-dimethyl-5-aminopentyl)benzene, 1,5-diaminonaphthalene, 2,6-diaminonaphthalene, 2,4-bis(β-amido-t-butyl)toluene, 2,4-diaminotoluene, m-xylene-2,5-diamine, p-xylene-2,5-diamine, m-xylenediamine, p-xylenediamine, 2,6-diaminopyridine, 2,5-diaminopyridine, 2,5-diamino-1,3,4-oxadiazole, and pyrazine.

More preferably, the dimine component may be one or more dimine selected from 2,2'-bis(trifluoromethyl)-4,4'-diaminobiphenyl) (TFMB), 1,3'-bis(4-aminophenoxy)-2,2-dimethylpropane) (DANPG), 2,2'-bis(4-aminophenoxy phenyl) propane (BAPP), 1,3-bis(3-aminophenoxy)benzene (APB), p-phenylene diamine (p-PDA), 3,4'-diaminodiphenyl ether (DAPE34), and 4,4'-diaminodiphenyl ether (DAPE44).

Preferably, anhydride used for preparing the polyamic acid resin may be, for example, pyromellitic dianhydride, 3,3',4,4'-biphenyltetracarboxylic anhydride, 3,3',4,4'-diphenylsulfone tetracarboxylic dianhydride, and 4,4'-oxydiphthalic dianhydride. In addition, preferably, anhydride may be, for example, 2,2',3,3'-benzophenonetetracarboxylic dianhydride, 2,3,3'4'-benzophenonetetracarboxylic dianhydride or 3,3',4,4'-benzophenonetetracarboxylic dianhydride, 2,3',3,4'-biphenyltetracarboxylic anhydride, 2,2'3,3'-biphenyltetracarboxylic anhydride, 2,3',3,4'-diphenylether tetracarboxylic dianhydride, and bis(2,3-dicarboxyl-phenyl)ether dianhydride. Further, preferably, anhydride may be, for example, 3,3",4,4"-p-terphenyltetracarboxylic dianhydride, 2,3,3",4"-p-terphenyltetracarboxylic dianhydride or 2,2",3,3"-p-terphenyltetracarboxylic dianhydride, 2,2-bis(2,3- or 3,4-dicarboxyl-phenyl)propane dianhydride, bis(2,3- or 3,4-dicarboxyl-phenyl) methane dianhydride, bis(2,3- or 3,4-dicarboxyl-phenyl)sulphone dianhydride, and 1,1-bis(2,3- or 3,4-dicarboxyl-phenyl) ethane dianhydride.

More preferably, anhydride may be one or more anhydride selected from pyromellitic dianhydride (PMDA), 3,3',4,4'-biphenyltetracarboxylic anhydride (BPDA), 3,3',4,4'-benzophenonetetracarboxylic dianhydride(BTDA), and 3,3',4,4'-diphenylsulfonetetracarboxylic dianhydride(DSDA).

The diamine and anhydride may be used alone, or two or more types of diamine and anhydride may be used in combination. In addition, other types of diamine and anhydride may also be used.

In this embodiment, in order to prepare the coating solution containing the metal compound or the polyamic acid resin solution free of metal ions (or metal salts), commercially available solution S containing polyamic acid resin sold may also be used. The polyamic acid solution to be used as a thermoplastic polyimide resin precursor may be, for example, thermoplastic polyamic acid resin vanish SPI-200N (trade name) manufactured by Nippon Steel Chemical Co., Ltd., thermoplastic polyamic acid resin vanish SPI-300N (trade name) manufactured by Nippon Steel Chemical Co., Ltd., thermoplastic polyamic acid resin vanish SPI-1000G (trade name) manufactured by Nippon Steel Chemical Co., Ltd., and Torayneece#3000 (trade name) manufactured by TORAY Co., Ltd. In addition, the polyamic acid solution to be used as a non-thermoplastic polyimide resin precursor may be, for example, non-thermoplastic polyamic acid resin vanish U-Varnish-A (trade name) manufactured by UBE Industries Co., Ltd., and non-thermoplastic polyamic acid resin vanish U-Varnish-S (trade name) manufactured by UBE Industries Co., Ltd.

When the nanocomposite material 10 is applied to applications that light-transmitting LSPR is used, the transparent or colorless polyimide resin is preferably a polyimide resin that is not easily to form a complex due to intramolecular and intermolecular Charge Transfer (CT), for example, an aromatic polyimide resin, an alicyclic polyimide resin, a fluorine-containing polyimide resin, and a silicon-containing polyimide resin that have a large-volume and three-dimensional substituent group.

The large-volume and three-dimensional substituent group may be, for example, a fluorene skeleton or a diamantane skeleton. The large-volume and three-dimensional substituent group may be substituted by either of the anhydride residue and diamine residue in the aromatic polyimide resin, or be substituted by both the anhydride residue and diamine residue. The diamine having the large-volume and three-dimensional substituent group may be, for example, 9,9-bis(4-aminophenyl)fluorene.

The so-called alicyclic polyimide resin refers to the resin formed by polymerized alicyclic anhydride and alicyclic diamine. In addition, the alicyclic polyimide resin may also be obtained by hydrogenating an aromatic polyimide resin.

The fluorine-containing polyimide resin is a resin formed by polymerized anhydride and/or diamine in which the monovalent elements bound to carbons of alkyl and phenyl are substituted by fluorine, perfluoroalkyl, perfluoroaryl,

perfluoroalkoxy, and perfluorophenoxyl. In the fluorine-containing polyimide resin, all or a part of monovalent elements may be substituted by fluorine atoms, and the fluorine-containing polyimide resin in which at least 50% of the monovalent element are substituted by fluorine atoms is more preferred.

The so-called silicon-containing polyimide resin refers to a resin obtained by, polymerizing a silicon-containing diamine and an anhydride.

When the thickness of the transparent polyimide resin is 10 μm, the transmittance at a wavelength of 400 nm is greater than and equal to 80%, and the mean transmittance of visible light is greater than and equal to 90%.

Among the above polyimide resins, the fluorine-containing polyimide resin with excellent transmittance is preferred. The fluorine-containing polyimide resin may be the polyimide resin having the structure unit shown in General Formula (1). In General Formula (1), $Ar_1$ represents a tetravalent aromatic group shown in Formula (2), Formula (3), or Formula (4); $Ar_2$ represents a divalent aromatic group shown in Formula (6), Formula (7), or Formula (8); and p is the number of repeated structure unit.

[Chemical Formula 1]

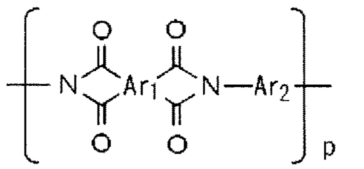

··· (1)

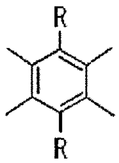

··· (2)

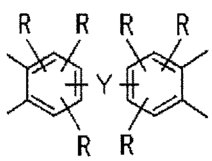

··· (3)

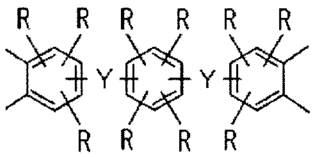

··· (4)

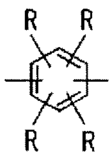

··· (5)

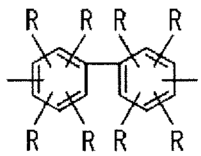

··· (6)

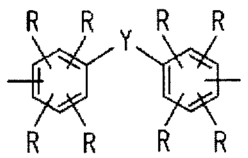

··· (7)

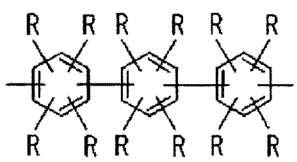

··· (8)

In addition, R independently represents fluorine atom or perfluoroalkyl; Y represents a divalent group shown in the following structural formula, $R_1$ represents perfluoroalkylene, and n refers to a number between 1 and 19.

[Chemical Formula 2]- O-, -CO-, $-SO_2-$,

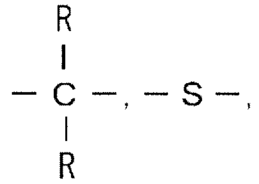

$-R_1-$, $-OR_1-$, $-R_1O-$, $-(OR_1)_n-$, $-(R_1O)_n-$, $-(OR_1O)_n-$ or $-O-CO-R_1-CO-O-$

In the above General Formula (1), $Ar_2$ may be referred to as a diamine residue, and $Ar_1$ may be referred to as an anhydride residue. Therefore, diamine, anhydride or other equivalent tetracarboxylic acid, acid chloride, and ester (hereinafter recorded as "anhydride") are taken as examples of the preferred fluorine-containing polyimide resin. The fluorine-containing polyimide resin is not limited to the fluorine-containing polyimide resin obtained from the diamine and anhydride.

As the raw material of $Ar_2$, the diamine may be any diamine in which all intramolecular monovalent elements bound to carbons of alkyl and benzene rings except the amido are set to be fluorine or perfluoroalkyl, and may be, for example, 3,4,5,6-tetrafluoro-1,2-phenylenediamine, 2,4,5,6-tetrafluoro-1,3-phenylenediamine, 2,3,5,6-tetrafluoro-1,4-phenylenediamine, 4,4'-diaminooctafluorobiphenyl, bis(2,3,5,6-tetrafluoro-4-aminophenyl)ether, bis(2,3,5,6-tetrafluoro-4-aminophenyl)sulphone, hexafluoro-2,2-bistrifluoromethy)-4,4'-diaminodiphenyl, and 2,2-bis(trifluoromethyl)-4,4'-diaminodiphenyl.

As the raw material of $Ar_1$, the anhydride may be, for example, 1,4-difluorobenzenetetracarboxylic acid, 1-trifluoromethyl-4-fluorobenzenetetracarboxylic acid, 1,4-bis(trifluoromethyl)benzenetetracarboxylic acid, 1,4-bis(pentafluoroethyl)benzenetetracarboxylic acid, hexafluoro-3,3',4,4'-biphenyltetracarboxylic acid , hexafluoro-3,3',4,4'-benzophenonetetracarboxylic acid, 2,2-bis(3,4-dicarboxylic trifluorophenyl)hexafluoropropane, 1,3-bis(3,4'-dicarboxylic trifluorophenyl)hexafluoropropane, 1,4-bis(3,4-dicarboxylic trifluorophenoxy)tetrafluoro benzene, hexafluoro-3,3',4,4'-oxydiphthalic acid, and 4,4'-(hexafluoroisopropylidene)biphenyltetracarboxylic acid.

The metal compound contained in the polyamic acid resin and the coating solution prepared according to the method (I), or the metal compound contained in the metal ions (or metal compound) solution prepared according to the method (II) is not particularly limited and may be a compound containing the metal for forming the metal microparticles 3. The metal compound may be a salt or an organic carbonyl complex of the metal. The salt of the metal may be, for example, hydrochloride, sulfate, acetate, oxalate, and citrate. In addition, the organic carbonyl composite that can be used to form an organic carbonyl complex with the metal may be, for example, β-diketones such as acetylacetone, benzoylacetone, and dibenzoylmethane, or β-keto carboxylic esters such as ethyl acetoacetate.

Preferably, the metal compound may be, for example, $H[AuCl_4]$, $Na[AuCl_4]$, AuI, AuCl, $AuCl_3$, $AuBr_3$, $NH_4[AuCl_4]\cdot n2H_2O$, $Ag(CH_3COO)$, AgCl, $AgClO_4$, $Ag_2CO_3$, AgI, $Ag_2SO_4$, $AgNO_3$, $Ni(CH_3COO)_2$, $Cu(CH_3COO)_2$, $CuSO_4$, $CuSO_4$, $CuSO_4$, $CuCl_2$, $CuSO_4$, $CuBr_2$, $Cu(NH_4)_2Cl_4$, CuI, $Cu(NO_3)_2$, $Cu(CH_3COCH_2COCH_3)_2$, $CoCl_2$, $CoCO_3$, $CoSO_4$, $Co(NO_3)_2$, $NiSO_4$, $NiCO_3$, $NiCl_2$, $NiBr_2$, $Ni(NO_3)_2$, $NiC_2O4$, $Ni(H_2PO_2)_2$, $Ni(CH_3COCH_2COCH_3)_2$, $Pd(CH_3COO)_2$, $PdSO_4$, $PdCO_3$, $PdCl_2$, $PdBr_2$, $Pd(NO_3)_2$, $Pd(CH_3COCH_2COCH_3)_2$, $SnCl_2$, $IrCl_3$, and $RhCl_3$.

In the coating solution containing the polyamic acid resin and the metal compound prepared according to the method (I), when a metal is used, a three-dimensional crosslinking reaction between metal ions generated by dissociation of the metal compound and the polyamic acid resin may occur. Therefore, the coating solution may be tackified and gelated over time, and cannot be used as a coating solution. In order to prevent the coating solution from being tackified and gelated, a viscosity modifying agent is preferably added to the coating solution to serve as a stabilizer. The viscosity modifying agent is added to prevent the metal ions in the coating solution from forming a chelate complex with the polyamic acid resin; instead, the viscosity modifying agent forms a chelate complex with the metal ions. In this manner, the three-dimensional crosslinking between the polyamic acid resin and metal ions is prevented by using the viscosity modifying agent, thereby inhibiting tackifying and gelation.

The viscosity modifying agent may be selected from low-molecule organic compounds that are highly reactive to the metal ions (that is, capable of forming a metal complex). The molecular weight of the low-molecule organic compounds may be in the range of 50 to 300. Specifically, the viscosity modifying agent may be, for example, acetylacetone, ethyl acetoacetate, pyridine, imidazole, and methyl pyridine. Besides, for forming 1 mole of chelate complex compound, the amount of the added viscosity modifying agent may be in the range of 1 mole to 50 moles, and more preferably, in the range of 2 moles to 20 moles.

Based on the total 100 parts by weight of the polyamic acid resin, the metal compound and the viscosity modifying agent, the formulation amount of the metal compound in the coating solution is preferably set to be in the range of 3 parts by weigh to 80 parts by weight, and more preferably, in the range of 20 parts by weigh to 60 parts by weight. In this case, if the metal compound is less than 3 parts by weight, the metal microparticles 3 are not fully precipitated, thereby failing to generate the surface plasmon resonance; and If the metal compound is greater than 80 parts by weight, metal salts cannot be dissolved in the coating solution and are precipitated, or the metal microparticles

3 are easily to be coagulated.

In addition, in the coating solution, an optional component other than the above components may be, for example, a formulation leveling agent, a defoaming agent, an adhesion imparting agent, and a crosslinking agent.

A method for coating the coating solution containing a metal compound or the polyamic acid resin solution free of metal ions (or metal salts) is not particularly limited, and may be performed, for example, by using a scraper, a mould, a blade or a lip. Preferably, a spin coater, a gravure coater, or a rod coater that can be used to uniformly form a coating film (or polyamic acid resin film) and easily control the thickness of the metal microparticle layer 5 or the matrix resin 1 with a high precision may be used.

Besides, in the metal ion solution used in the method (II), preferably, the concentration of the metal compound may be in the range of 30 mM to 300 mM, and more preferably, in the range of 50 mM to 100 mM. If the concentration of the metal compound is less than 30 mM, it takes a lot of time to impregnate the metal ion solution into the polyamic acid resin film, which is not desirable. If the concentration of the metal compound is greater than 300 mM, the surface of the polyamic acid resin film may be eroded (dissolved).

In addition to the metal compounds, the metal ion solution may also contain other components such as a buffer for adjusting the pH value.

The impregnation method is not particularly limited, provided that the surface of the polyamic acid resin film can contact with the metal ion solution, and a well-known method, for example, a dipping method, a spraying method, a brush painting or printing method, may be adopted. The impregnation temperature is suitable 0°C to 100°C, and preferably a normal temperature close to 20°C to 40°C. In addition, when the dipping method is adopted, the impregnation time is preferably 1 minute to 5 hours, and more preferably 5 minutes to 2 hours. When the dipping time is less than 1 minute, the impregnation of the metal ion solution on the polyamic acid resin film is insufficient. On another hand, even if the dipping time exceeds 5 hours, the impregnation degree of the metal ion solution on the polyamic acid resin film tends to be stable.

After being coated with the coating solution containing the metal compound or the polyamic acid resin solution free of metal ions (or metal salts) and dried, the polyamic acid resin film is formed. During drying, the temperature is controlled in a way that the imidization caused by ring-closing dehydration of the polyamic acid resin is not completed. The drying method is not particularly limited, and preferably, drying is performed at a temperature in the range of 60°C to 200°C for 1 minute to 60 minutes, and more preferably, drying is performed at a temperature in the range of 60°C to 150°C. In the dried polyamic acid resin film, a part of the structure of the polyamic acid resin may be imidized; the imidization ratio is preferably set to be less than and equal to 50%, and more preferably, less than and equal to 20% of the structure of the polyamic acid resin, with at least 50% of the structure of the polyamic acid resin remained. In addition, the imidization rate of the polyamic acid resin is calculated by the absorbance of an imide group at 1,710 $cm^{-1}$ in an infrared absorption spectrum of the film through a transmission method by using a Fourier transform infrared spectrophotometer (commercially available, for example, FT/IR620 manufactured by Jasco Inc., Japan), with the absorbance of an benzene ring carbon hydrogen bond at 1,000 $cm^{-1}$ as a reference.

Alkali modification method

The alkali modification method is a method including modifying the surface of the polyimide film to form a polyamic acid resin layer, and then impregnating the metal ion solution into the polyamic acid resin layer. Besides, the used polyimide resin is the same as that in the film casting method, which is not described herein again.

The alkali modification method has the following advantage: the solution containing metal ions (or metal compound) uniformly dissolved is impregnated into the polyamic acid resin layer, and the metal ions (or metal salts) are uniformly dispersed in the polyamic acid resin layer with less variation, a nanocomposite material 10 containing the metal microparticles 3 with a small particle diameter distribution can be fabricated; an integrated nanocomposite material 10 closely adhered to the substrate of the polyimide film can be fabricated; when the nanocomposite material 10 is fabricated on the surface side of the polyimide film, the nanocomposite material 10 can also be fabricated at the rear side of the polyimide film through the same steps; or the metal ions in the metal ion solution can be easily exchanged with ions of a salt derived from an alkali metal from the alkali aqueous solution and a carboxyl group at the terminal of the polyimide resin (which can shorten the impregnation time).

Preferably, the alkali aqueous solution for treating the polyimide film may be an alkali aqueous solution of sodium hydroxide or potassium hydroxide with a concentration in the range of 0.5 wt% to 50 wt% at a liquid temperature in the range of 5°C to 80°C. The alkali aqueous solution may be applied by a dipping method, spraying method or brush coating, and so on. For example, when the dipping method is adopted, treating the polyimide film with the alkali aqueous solution for 10 seconds to 60 minutes is effective. Preferably, the alkali aqueous solution with a concentration in the range of 1 wt% to 30 wt% at a liquid temperature in the range of 25°C to 60°C is used to treat the surface of the polyimide film for 30 seconds to 10 minutes. The treatment condition of the polyimide film may be changed according to the structure of the polyimide film. Usually, when the concentration of the alkali aqueous solution is low, the treatment time of the

polyimide film may be increased. Besides, if the liquid temperature of the alkali aqueous solution is raised, the processing time is shortened.

If the alkali aqueous solution is used for treatment, the alkali aqueous solution is permeated at the surface side of the polyimide to modify the polyimide resin. It is generally considered that the modification reaction caused by the alkali treatment mainly is the hydrolysis of the imide bond. The thickness of the alkali treatment layer formed by the alkali treatment is preferably in the range of 1/5000 to 1/20, and more preferably in the range of 1/500 to 1/50, of the thickness of the polyimide film. In addition, from another point of view, the thickness of the alkali treatment layer is preferably in the range of 20 nm to 150 nm, more preferably in the range of 50 nm to 150 nm, and further more preferably from 100 nm to 120 nm. Setting the thickness in the range is beneficial to the formation of the metal microparticles 3.

For the ease of modification of the polyimide film by using the alkali aqueous solution, a polyimide film with high water absorption rate is an ideal selection. The water absorption rate of the polyimide film is preferably higher than 0.1%, and more preferably, higher than 0.2%. The water absorption rate is undesirably less than 0.1 %, because modification cannot be fully performed, or the modification time needs to be prolonged to a sufficient value.

In addition, since the polyimide film varies as the chemical structure of the polyimide resin that forms the polyimide film varies, the degree of the modification treatment by using the alkali aqueous solution may be different, so a polyimide film on which the modification treatment can be easily be performed is preferred. The polyimide film on which the modification treatment by using the alkali aqueous solution can be easily performed may be, for example, a polyimide film having an ester bond in the structure of the polyimide resin, or a polyimide film in which pyromellitic dianhydride is used as a monomer derived from anhydride (relative to 100 moles of the anhydride component, the amount of the pyromellitic dianhydride is preferably greater than and equal to 50 moles, and more preferably greater than and equal to 60 moles).

According to different uses, both surfaces of the polyimide film may be modified through alkali treatment at the same time. The polyimide resin layer containing a low-thermal expansion polyimide resin is especially effective, thus being preferred for the alkali treatment, and thus being preferred. The low-thermal expansion polyimide resin has good adaptability (wettability) with the alkali aqueous solution, and thus being easily to undergo a ring-opening reaction of the imide ring caused by the alkali treatment.

A salt derived from an alkali metal from the alkali aqueous solution and the carboxyl group at the terminal of the polyimide resin may be formed in the alkali treated layer. Through the impregnation treatment of the metal ion solution in the subsequent metal ion solution impregnation step, the alkali metal salt of the carboxyl group may be replaced by a metal ion salt, so it is acceptable that metal ion salt is present before the metal ion solution impregnation step. Besides, an acid aqueous solution may be used to neutralize the basic surface layer of the polyimide resin. Any acid aqueous solution may be used, provided that the aqueous solution is acidic, and hydrochloric acid aqueous solution or sulfuric acid aqueous solution is preferred. Besides, the concentration of the acid aqueous solution is preferably in the range from 0.5 wt% to 50 wt%, and more preferably in the range from 0.5 wt% to 5 wt%. Preferably, the pH value of the acid aqueous solution is preferably set to be lower than 2. Preferably, after being washed with an acid aqueous solution, the polyimide film is washed by water and dried, and then is subjected to the subsequent metal ion solution impregnation step.

The polyimide film for forming the alkali modification layer is impregnated with the metal ion solution, and is dried to form a layer containing metal ions (or metal salts). Through the impregnation treatment, the carboxyl group in the alkali modification layer is converted into a carboxyl metal salt.

The metal ions, the metal compound and the metal ion solution used in the impregnation step may be the same as the metal ions, the metal compound and the metal ion solution used in the impregnation step in the film casting method.

The impregnation method is not particularly limited, provided that the surface of the alkali modification layer can contact with the metal ion solution, and well-known methods, for example, a dipping method, a spraying method, a brush painting or printing method, may be used. Preferably, the impregnation temperature may be in the range of 0°C to 100°C, and the impregnation temperature is a normal temperature close to 20°C and 40°C. In addition, when the dipping method is adopted, the impregnation time is preferably 1 minute to 5 hours, and more preferably, 5 minutes to 2 hours.

Drying is performed after impregnation. The drying method is not particularly limited, and may be, for example, natural drying, blowing drying by using an air gun, or drying by using an oven. The drying is performed at 10°C to 150°C for 5 seconds to 60 minutes, preferably at 25°C to 150°C for 10 seconds to 30 minutes, and more preferably at 30°C to 120°C for 1 minute to 10 minutes.

(2) Reduction step

In the reduction step, heat treatment is performed on the polyamic acid layer containing metal ions obtained in the foregoing manners, preferably at a temperature of higher than 140°C, and more preferably in the range of 160°C and 450°C, and further more preferably in the range of 200°C and 400°C, so that the metal ions (or metal salts) are reduced and the metal microparticles 3 are precipitated. If the temperature of the heat treatment is lower than 140°C,

the metal ions (or metal salts) are not fully reduced, and it is difficult to set the mean particle diameter of the metal microparticles to be greater than and equal to the lower limit (10 nm). Besides, if the temperature of the heat treatment is lower than 140°C, heat diffusion of the metal microparticles 3 precipitated through reduction in the matrix resin 1 may be insufficient. Further, if the temperature of the heat treatment is lower than 140°C, when a polyimide resin is used as the matrix resin 1, the polyamic acid resin, as a polyimide resin precursor, may not be fully imidized, and the imidization step needs to be performed again by heating. On another hand, if the temperature of the heat treatment exceeds 450°C, the matrix resin 1 may be decomposed due to heat; along with the decomposition of the matrix resin 1, new absorption other than the absorption from the LSPR may be easily caused; or the spacing between adjacent metal microparticles 3 may be decreased. As a result, the adjacent metal microparticles 3 may interact with each other, leading to a wider LSPR absorption spectrum.

The heat treatment time may be determined according to a target interparticle distance, the temperature of the heat treatment, and the content of the metal ions (or metal salts) in the polyamic acid layer containing metal ions. For example, if the temperature of the heat treatment is 200°C, the heat treatment time may be set to be in the range of 10 minutes to 180 minutes; if the temperature of the heat treatment is 400°C, the heat treatment time may be set to be in the range of 1 minute to 60 minutes.

The particle diameters D and the interparticle distance L of the metal microparticles 3 may be controlled by the heating temperature and heating time in the reduction step, and the content of the metal ions (or metal salts) in the matrix resin 1 (or a precursor resin layer thereof). The inventors of the present invention have the following viewpoint: if the heating temperature and heating time in the heat-reduction are fixed, and the absolute content of the metal ions (or metal salts) in the matrix resin 1 (or in the precursor resin layer thereof) varies, the particle diameters D of the precipitated metal microparticles 3 vary. In addition, the inventors also have the following viewpoint: when the heating temperature and heating time of the heat-reduction are not controlled, the interparticle distance L may be less than a particle diameter $D_L$ of a larger one of adjacent metal microparticles, or the metal microparticles 3 are coagulated on the surface S of the matrix resin 1 to form islands.

Based on the viewpoints, the particle diameters D of the metal microparticles 3 may be controlled by controlling the heating temperature; the interparticle distance L may be controlled by controlling the heating time. These points of view are specifically illustrated based on examples. For example, in the polyamic acid resin layer (a resin layer of a precursor of the matrix resin 1) with a thickness of 200 nm, heat-reduction in atmosphere is performed on gold ions with a content of 18 wt% per cubic centimeter (5.2 μg per square centimeter), the particle diameters D and the interparticle distance L of the metal gold microparticles formed through heat-reduction vary with the heating temperature and heating time. That is, the particle diameters D are about 9 nm (the mean particle diameter is about 9 nm) when the treatment is performed for 10 minutes at 200°C; the particle diameters D are about 13 nm (the mean particle diameter is about 13 nm) when the treatment is performed for 3 minutes at 300°C; and the particle diameters D are about 15 nm (the mean particle diameter is about 15 nm) when the treatment is performed for 1 minute at 400°C. In any case, the nanocomposite material is formed under the condition that the spacing between adjacent metal gold microparticles is greater than and equal to the particle diameter of a larger one of the adjacent metal gold microparticles (which is approximately close to the particle diameter D). Based on the foregoing examples, the thickness of the metal microparticle layer 5 is controlled in the above range, so as to form a nanocomposite material 10 meeting the above requirements.

In addition, by applying the above viewpoints, the heat treatment in the reduction step may also be divided into a plurality of steps. For example, the following steps may be performed: a particle diameter control step of controlling the metal microparticles 3 to grow to a specified particle diameters D at a first heating temperature, and an interparticle distance control step of maintaining the interparticle distance L of the metal microparticles 3 until the interparticle distance L reaches a specified range at a second heating temperature which is the same as or different from the first heating temperature. In this manner, the particle diameters D and the interparticle distance L may be controlled more precisely by adjusting the first and second heating temperature as well as the heating time.

The heat-reduction is adopted as the reduction method because the heat-reduction has the following industrial advantages: the particle diameters D and the interparticle distance L can be easily controlled by controlling the treatment conditions of reduction (especially the heating temperature and heating time); or simple devices may be used in the lab scale to production scale without any limitation; moreover, the heating-reduction can be applied to single or continuous mode without any specific research. The heat-reduction may be carried out in an inert gas atmosphere such as Ar and $N_2$, or in vacuum or atmosphere of 1 KPa to 5 KPa. The gas-phase reduction using reducing gases such as hydrogen or photo-reduction (ultraviolet) is undesirably used as the reduction method. In gas-phase reduction, no metal microparticle 3 is formed near the surface S of the matrix resin 1, and the reducing gas promotes thermal decomposition of the matrix resin; and therefore, it is difficult to control the particle spacing of the metal microparticles 3. In addition, in photo-reduction, due to the transmittance of the matrix resin 1, the metal microparticles 3 near the surface and those in the deep portion may have non-uniform densities; and therefore, it is difficult to control the particle diameters D and interparticle distance L of the metal microparticles 3, and the reduction efficiency is low.

In the reduction step, the imidization of the polyamic acid may be conducted by using the heat in the reduction

treatment, and therefore, the steps from precipitation to imidization of the metal microparticles 3 may be carried out by a one-pot process, thereby simplifying the production steps.

In the heat-reduction, the metal ions (or metal salts) in the matrix resin 1 (or the precursor resin layer thereof) are reduced, and the metal microparticles 3 are independently precipitated by means of heat diffusion. The metal microparticles 3 thus formed maintain an interparticle distance L greater than and equal to a certain value, and have shapes that are substantially uniform, and the metal microparticles 3 are uniformly dispersed in the matrix resin 1 in a three-dimensional manner. Especially, when the metal ions (or metal salts) in the polyamic acid resin layer containing metal ions are adsorbed on the carboxyl group of the polyamic acid resin, or a complex is formed, the shapes or particle diameters D of the metal microparticles 3 are homogenized, so that a nanocomposite material 10 in which the metal microparticles 3 are uniformly precipitated and dispersed in the matrix resin 1 with the substantially uniform interparticle distance L is obtained. In addition, by controlling resin structure units that form the matrix resin 1 or controlling the absolute amount of the metal ions (or metal salts) and the volume fraction of the metal microparticles 3, the particle diameters D of the metal microparticles 3 and the distribution state of the metal microparticles 3 in the matrix resin 1 may also be controlled.

As described above, the nanocomposite material 10 having the structure shown in FIG. 1 can be produced. In addition, when resins other than the polyimide resin (polyamic acid) are used as the matrix resin 1, the foregoing production method may also be used.

In addition, during the production of the nanocomposite material 10, besides the steps (1) and (2), any steps such as the following (3) etching step and (4) patterning step may be performed.

(3) Etching step

In the etching step, a part of the metal microparticles 3 in the matrix resin 1 of the nanocomposite material 10 may be exposed from the surface S of the matrix resin 1. For example, in the nanocomposite material 10, the surface of the matrix resin 1 at a side where the metal microparticles 3 are required to be exposed is removed by etching. The etching method may be, for example, a wet etching method using a hydrazide solution or an alkali solution, or a dry etching method using plasma treatment.

In the wet etching method, for example, in view of the hight permeability of the etching solution, a desired matrix resin adopted in the etching using an alkali solution may be a matrix resin with a high water absorption rate, and the water absorption rate is preferably higher than 0.1%, and more preferably higher than 0.2%.

In the dry etching method, for example, in view of the hight reactivity with gases in a plasma state, a desired matrix resin adopted in the etching using plasma may be a matrix resin containing a halogen atom and a polar group such as -OH, -SH, -O, -S-, -SO-, -NH-, -CO-, -CN, -P=O, -PO-, $-SO_2-$ -CONH-, and $-SO_3H$. In addition, from another point of view, like the etching using an alkali solution, the matrix resin with a high water absorption rate is desirable, and the water absorption rate is preferably higher than 0.1%, and more preferably higher than 0.2%.

For the nanocomposite material 10a after etching, the thickness of the nanocomposite material 10a is thinner than that of the nanocomposite material 10 before etching, nanocomposite material 10a. The lower portion of the metal microparticle 3 is embedded in the matrix resin 1 for immobilization, and the upper portion of the metal microparticles 3 is exposed from a new surface S of the matrix resin 1 to form an exposed portion 3a. When the nanocomposite material 10a is used in an affinity biosensor, the exposed portion 3a of the metal microparticles 3 may be used as ligand fixing site.

(4) Patterning step

The patterning may be implemented through a combination of a photolithography technology and etching, and performed in the following sequence. First, the nanocomposite material 10 is laminated on any substrate to form a substrate. Herein, the foregoing substrate may be used as the substrate. Moreover, a resist liquid is coated on the nanocomposite material 10 and dried, to form a resist layer. Then, a mask with a specified pattern is used to expose the resist layer, and development is performed, so that a pattern is formed on the resist layer on the nanocomposite material 10. The resist layer formed with the pattern is used as a shielding, and a part of the nanocomposite material 10 that is not shielded by the resist layer is removed through a method the same as that of the etching step. The etching is perforem until the substrate is exposed. Then, the resist layer is removed to obtain the patterned nanocomposite material on the substrate. For example, the patterned nanocomposite material is preferably used in multi-channel sensing devices, and applied in use such as plasmon waveguide for displaying LSPR microstructures or micro-optical components.

In the method of this embodiment, the direct metalization and heat-reduction are combined, so that a nanocomposite material with metal microparticles of a uniform size or shape that are substantially uniformly dispersed in a plane, without coagulated particles is obtained. In addition, with etching treatment as an additional step, the metal microparticles 3 are regularly exposed from the surface S of the matrix resin 1. Besides, with partterning step as an

additional step, the nanocomposite material is formed into a pattern with a desired shape depending on the purpose of use.

[Second Embodiment]

The second embodiment of the present invention is described in detail.

<Metal microparticle composite>

FIG. 5 shows a schematical cross-sectional structure of a nanocomposite material 20 dispersed with metal microparticles 20 as the metal microparticle composite of this embodiment in a depth direction. The nanocomposite material 20 includes a matrix resin 1, a metal microparticles 3 immobilized on the matrix resin 1, and bonded chemical species 7 immobilized on a part or all of the metal microparticles 3. FIG. 6 is an amplified view of metal microparticles 3 (in which the bonded chemical species 7 are not immobilized). In addition, in FIG. 6, the particle diameter of a larger one of adjacent metal microparticles 3 is represented as $D_L$, the particle diameter of a smaller one of adjacent metal microparticles 3 is represented as $D_S$, and when the two particle diameters are not distinguished, the particle diameter is merely recorded as particle diameter D.

In addition, the nanocomposite material 20 may also have a substrate that is not shown. As such a substrate, a substrate that is the same as that in the first embodiment may be used.

<Matrix resin>

The matrix resin 1 may be formed into a film-shape as a whole, and may also be formed as a part of a resin film. The metal microparticles 3 are dispersed in the plane direction parallel to a surface S of the matrix resin 1 (a surface of the nanocomposite material 20), to form a metal microparticle layer 5 with a certain thickness. The thickness T of the metal microparticle layer 5 may vary depending on the particle diameters D of the metal microparticles 3, but, for example, in the use of using LSPR, the thickness T of the metal microparticle layer 5 is preferably in the range of 20 nm to 25 μm, and more preferably in the range of 30 nm to 1 μm. Herein, the so-called "thickness of the metal microparticle layer 5" refers to, in the cross-section of the matrix resin 1 in the thickness direction, a thickness of a range from the upper end of the metal microparticles 3 (metal microparticles 3 having the particle diameters in the range of 3 nm to 100 nm) that are located at the top (a side exposed from the matrix resin 1) to the lower end of the metal microparticles 3 (metal microparticles having the particle diameters in the range of 3 nm to 100 nm) that are located at the bottom (deep part).

In addition, in the use of detecting changes out of the matrix resin 1, as the metal microparticles that fare completely embeded in the matrix almost does not participate in sensing the external changes, from this point of view, the thickness T' of the metal microparticle layer 5 containing the metal microparticles 3 with an exposed portion 3a is, for example, preferably in the range of 20 nm to 100 nm, and more particularly in the range of 30 nm to 90 nm. Herein, the so-called "thickness T' of the metal microparticle layer 5" refers to, in a cross-section in the thickness direction of the matrix resin 1, a thickness of a range from the upper end of the metal microparticles 3 (metal microparticles 3 with the particle diameters in the range of 10 nm to 80 nm) that are located at the most top (a side exposed from the matrix resin 1) and have the exposed portion 3a to the lower end of the metal microparticles 3 (metal microparticles 3 with the particle diameters in the range of 10 nm to 80 nm) that are located at the most bottom (deep part) and have the exposed portion 3a.

In addition, when the matrix resin 1 is formed to be a part of the resin film, the thickness of the resin film is preferably in the range of 3 μm to 100 μm, and more preferably in the range of 10 μm to 50 μm.

In order to produce LSPR of the metal microparticles 3, the resin for forming the matrix resin 1 is preferably light-transmissive, and is more preferably a material that light with a wavelength of greater than and equal to 380 nm can penetrate. In such matrix resin 1, LSPR is set to be light-transmitting LSPR for measurement. On another hand, the resin that is almost non-light-transmissive may also be used as the matrix resin 1, and LSPR is set to be light-reflecting LSPR for measurement. In this aspect, the present invention is not limited to the light-transmitting LSPR and the light-reflecting LSPR, for example, the aspect may also be applied to a sensitivity sensor for sensing changes out of the matrix resin 1.

A resin material useful in the matrix resin 1 is not particularly limited, and the resin material that is the same as that in the first embodiment may be used.

<Metal microparticles>

In the nanocomposite material 20 of this embodiment, the metal microparticles 3 meet the follwoing requirements 2a) to 2e).

2a) The metal microparticles 3 are obtained by heat-reducing metal ions or metal salts contained in the matrix

resin 1 or a precursor resin layer thereof. The reduciton method may be, for example, photo-reduction or heat-reduction, but in view of the ease in controlling the particle spacing between the metal microparticles 3, the metal microparticles 3 are preferably obtained through heat-reduction. The material of the metal microparticles 3 is not particularly limited, provided that the metal microparticles can be obtained, and the material may be, for example, metal species such as gold (Au), silver (Ag), copper (Cu), cobalt (Co), nickel (Ni), palladium (Pd), platinum (Pt), tin (Sn), rhodium (Rh), and iridium (Ir). In addition, an alloy of these metal species (such as platinum-cobalt alloy) may also be used. Among these metal species, metal species that can produce LSPR, for example, gold (Au), silver (Ag), copper (Cu), palladium (Pd), platinum (Pt), tin (Sn), rhodium (Rh), and iridium (Ir), are preferred, and gold (Au) or silver (Ag) is more preferable.

The metal microparticles 3 may be in various shapes such as a ball, an ellipsoid, a cube, a truncated tetrahedron, a weight bicornis, an octahedron, a decanedron and an icosahedron, with a ball shape that can make the absorption spectrum of the LSPR sharp being preferred. Herein, the shape of the metal nanoparticles 3 may be confirmed through observation by using a TEM. Moreover, the mean particle diameter of the metal nanoparticles 3 is set to a measured area mean diameter of any 100 metal nanoparticles 3. In addition, the so-called spherical metal nanoparticles 3 are metal nanoparticles in shapes of balls or close to balls, and refer to metal nanoparticles with a ratio of a mean long diameter to a mean short diameter being 1 or close to 1 (preferably higher than 0.8). Besides, the relationship between the long diameters and short diameters of metal nanoparticles 3 is preferably satisfying the formula of the long diameter < the short diameter x 1.35, and is more preferably satisfying the formula of the long diameter ≦ the short diameter x 1.25. In addition, when the metal nanoparticles 3 are not spherical (for example, the metal nanoparticles 3 are in the shape of an octahedron), the length of a longest edge of the metal nanoparticle 3 is set to be the long diameter of the metal nanoparticle 3, and the length of a shortest edge is set to be a short diameter of the metal nanoparticle 3, where the long diameter is regarded as the particle diameter D of the metal nanoparticle 3.

2b) The article diameters (D) of the metal microparticles 3 are in the range of 1 nm to 100 nm, and more preferably in the range of 3 nm to 80 nm, and the mean particle diameter is greater than and equal to 3 nm. Herein, the so-called mean particle diameter refers to a mean value of the diameters (a median diameter) of the metal microparticles 3. If the particle diameters D of the metal microparticles 3 exceed 100 nm, the sufficient LSPR effect cannot be obtained. In addition, the particle diameters D of 90% to 100% of the metal microparticles 3 are preferably in the range of 10 nm to 80 nm. In addition, for example, in the nanocomposite material 20 containing the metal microparticles 3 having a greatest particle diameter in the range of 50 nm to 60 nm, even if the particle diameter distribution is large, the metal microparticles 3 may also be dispersed with an interparticle distance greater than and equal to the particle diameters, so that a nanocomposite material 20 of which the LSPR absorption spectrum is sharp can be easily obtained. Therefore, in the nanocomposite material 20 containing the metal microparticles 3 having a greatest particle diameter in the range of 50 nm to 60 nm, the particle diameter distribution of the metal microparticles 3 is not particularly limited, thus being a preferred aspect. On another hand, for the nanocomposite material 20 containing the metal microparticles 3 with the particle diameters of greater than and equal to 60 nm, the smaller the particle diameter distribution of the metal microparticles 3 is, the sharper the LSPR absorption spectrum is. Therefore, the particle diameter distribution of the metal microparticles 3 is preferably controlled to be small.

When the metal microparticles 3 are not spherical, due to the trend that the greater the apparent diameter is, the wider the LSPR absorption spectrum is, if the metal nanoparticles 3 are not spherical, the particle diameters D are preferably less than and equal to 30 nm, more preferably less than and equal to 20 nm, and further more preferably less than and equal to 10 nm. In addition, when the metal nanoparticles 3 are not spherical, compared with shapes of other and metal nanoparticles 3, preferably, the shapes of at least 80%, and more preferably, at least 90% of all the metal nanoparticles 3 in the matrix resin 1 are substantially the same; and more preferably, the shapes are substantially the same.

The metal nanoparticles 3 with the particle diameters D of less than 1 nm may exist in the nanocomposite material 20, such nanocomposite material 20 is not likely to affect the LSPR, and no specific problem occurs. In addition, based on 100 parts by weight of the metal nanoparticles 3 in the nanocomposite material 20, for example, when the metal nanoparticles 3 are silver nanoparticles, the amount of the metal nanoparticles 3 with the particle diameters D of less than 1 nm is preferably set to be less than and equal to 10 parts by weight, and more preferably less than and equal to 1 part by weight. Herein, the metal nanoparticles 3 with the particle diameters D of less than 1 nm may be detected by using an X-ray Photoelectron Spectroscope (XPS) analyzer or Energy Dispersive X-ray (EDX) analyzer.

In addition, in order to achieve a better LSPR effect, the mean particle diameter of the metal nanoparticles 3 is preferably set to be greater than and equal to 3 nm, and more preferably in the range of 5 nm to 50 nm. When the mean particle diameter of the metal nanoparticles 3 is less than 3 nm, the LSPR absorption spectrum tends to be less intense.

In addition, in the use of detecting changes out of the matrix resin 1, in order to effectively obtain the LSPR effect generated by the metal microparticles 3 related to the external change detection, the best aspect of the nanocomposite material 20 is that when the cross-section parallel to the surface S of the matrix resin 1 is observed, all the metal microparticles 3 are completely independent. In this case, the particle diameters D of the metal microparticles 3 are

preferably in the range of 10 nm to 80 nm. By setting the particle diameters D to be greater than and equal to 10 nm, the LSPR effect generated by the metal microparticles 3 that are distributed in a single layer can be effectively obtained. For example, when the cross-section of the matrix resin 1 is observed by using a TEM for detection, the present ratio of the metal microparticles 3 with the particle diameters D in the range of 1 nm to less than 10 nm relative to all the metal microparticles 3 in the nanocomposite material 20 is preferably less than 10%, and more preferably less than 5%, and further more preferably less than 1%. Herein, the so-called present ratio refers to a value obtained by dividing a total cross-sectional area of metal microparticles 3 with the particle diameters D in the range of 1 nm to less than 10 nm by a total cross-sectional area of all the metal microparticles 3. Herein, when the metal microparticles 3 with the particle diameters D of less than 10 nm presents, it is confirmed that the metal microparticles 3 are overlapped on in the thickness direction of the nanocomposite material 20. In this case, relative to the total cross-sectional area of all the observed metal microparticles 3, the total cross-sectional area of the metal microparticles 3 that are observed to be completely independent is preferably higher than 90%, and more preferably higher than 95%, and further more preferably higher than 99%. By setting the foregoing range, the changes of the LSPR of the metal microparticles 3 that are exposed from the surface S of the matrix resin 1 can be effective detected. In addition, as the smaller the particle diameter distribution of the metal microparticles 3 is, the sharper the LSPR absorption spectrum is, the particle diameter distribution of the metal microparticles 3 is preferably controlled to be small. From this point of view, for the particle diameter distribution of the metal microparticles 3, the relationship between the largest particle diameter (Dmax) and the smallest particle diameter (Dmin) is preferably $(1/3 \times Dmax) \leq (1 x Dmin)$. In addition, as the particle diameters D of the metal microparticles 3 are closely associated with the thickness (T') of the metal microparticle layer 5, the relationship between the thickness T' (nm) of the metal microparticle layer 5 and the largest particle diameter

$$Dmax \text{ is preferably } (1/2 \times T') \leq (1 \times Dmax).$$

2c) The metal microparticles 3 do not contact with each other, and exist with a spacing of greater than and equal to the particle diameter of a larger one of the adjacent metal microparticles. That is, the spacing (interparticle distance) L of the adjacent metal microparticles 3 is greater than and equal to the diameter $D_L$ of the larger one of the adjacent metal microparticles 3, namely, $(L \geq D_L)$. In addition, the relationship between the particle diameter $D_L$ of the larger one of the adjacent metal microparticles 3 and the particle diameter of the smaller one is $D_S$ is $D_L \geq D_S$. When the interparticle distance L is less than the greater particle diameter $D_L$, the following situation is present: when LSPR is generated due to interference is present between particles, for example, two particle move together like a large particle, a sharpt sbsorption spectrum cannot be obtained. On another hand, even if the interparticle distance L is great, no specific problem occurs, for example, as the interparticle distance L of the metal microparticles 3 that are dispersed by means of thermal diffusion is closely associated with the particle diameters D of the metal microparticles 3 and the volume fraction of the metal microparticles 3, an upper limit of the interparticle distance L is preferably controlled according to a lower limit of the volume fraction of the metal microparticles 3. When the interparticle distance L is great, in other words, when the volume fraction of the metal microparticles 3 relative to the nanocomposite material 20 is low, the intensity of the LSPR absorption spectrum is decreased. In this case, for example, relative to all the metal microparticles, the present ratio of the metal microparticles 3 with the particle diameters D of greater than and equal to 50 nm in the nanocomposite material 20 is preferably set to be higher than 90%, and more preferably higher than 95%, and further more preferably higher than 99%, thereby enhancing the intensity of the LSPR absorption spectrum. Herein, the so-called present ratio refers to a value obtained by dividing the total cross-sectional area of the metal microparticles 3 with the particle diameters D of greater than and equal to 50 nm by the total cross-sectional area of all the metal microparticles.

In addition, the metal microparticles 3 may be dispersed in the matrix resin 1 in a three-dimensional manner. That is, if the cross-section of the film-shaped matrix resin 1 in the thickness direction in the nanocomposite material 20 is observed, the state is shown in FIG. 6: a large quantity of the metal microparticles 3 are distributed longitudinally and horizontally with the interparticle distance L of greater than and equal to the particle diameter D. In addition, if the cross-section parallel to the surface of the matrix resin 1 in the nanocomposite material 20 is observed, the following state may be observed: a large quantity of the metal microparticles 3 are distributed and dispersed with the interparticle distance L of greater than and equal to the particle diameter D in the matrix resin 1.

In addition, at least 90% of the metal microparticles 3 are distributed with the interparticle distance L of greater than and equal to particle diameter $D_L$ as single particles. Herein, so-called "single particle" herein refers to the metal nanoparticles 3 in the matrix resin layer 1 being present independently, and not a plurality of particles coagulated together (coagulated particles). That is, the so-called single particle does not include any coagulated particle in which a plurality of metal microparticles is coagulated by means of an intermolecular force. In addition, the so-called "coagulated particle" refers to a particle that is formed by coagulating a plurality of individual metal microparticles can be clearly observed by using, for example, a TEM. In addition, the chemical structure of the metal microparticles 3 in the nanocomposite material

20 can also be illustrated as metal microparticles formed by coagulating metal atoms that are generated through heat-reduction; however, it is generally considered that the metal microparticles are formed through metal bonds of metal atoms, so as to be distinguished from the coagulated particles formed by coagulating a plurality of particles, for example, when being observed by using a TEM, the metal microparticles are identified as independent metal microparticles 3.

At least 90%, and preferably at least 95% of the metal nanoparticles 3 are present as single particles, so the LSPR absorption spectrum becomes sharp and stable, thereby achieving high-precision detection. In other words, this situation refers to that the coagulated particles or the particles dispersed with an interparticle distance L of less than and equal to the particle diameter $D_L$ are at most 10%. When such particles exceed 10%, the SPR absorption spectrum becomes wider or unstable, and in use of sensor, high-precision detection cannot be achieved. In addition, if the coagulated particles or the particles that are dispersed with an interparticle distance L of less than the particle diameter $D_L$ exceeds 10%, it is difficult to control the particle diameter D.

In addition, in the use of detecting changes out of the matrix resin 1, in order to effectively obtain the LSPR effect generated by the metal microparticles 3 related to the external change detection, preferably, the metal microparticles 3 are substantially dispersed in the matrix resin 1 in a plane. In other words, preferably, in a range extending form the surface S of the matrix resin 1 to a depth of 100 nm, at least 90% of all the metal microparticles are dispersed in the plane direction parallel to the surface S, to form a metal microparticle layer 5, and in the metal microparticle layer 5, merely one metal microparticle 3 with the particle diameter D in the range of 10 nm to 80 nm is present in the depth direction. That is, althrough the figure is omitted, when the cross-section parallel to the surface S of the matrix resin 1 in the nanocomposite material 20 is observed, the following state is observed: a large quantity of metal microparticles 3 with the particle diameters D in the range of 10 nm to 80 nm are distributed and dispersed in the matrix resin 1 (or the surface S) with the interparticle distance L; and moreover, if the cross-section in the depth direction of the matrix resin 1 is obseved, as shown in FIG. 5, in the range of the metal microparticle layer 5, a large quantity of metal microparticles 3 with the particle diameters D in the range of 10 nm to 80 nm are completely independently distributed in a single layer (although positions of some particles positions are not aligned, the positions are substantially in a column) in the metal nanoparticle layer. A method for observing such a state may use a Scanning Electron Microscope (SEM) with a sputtering function.

In addition, relative to the nanocomposite material 20, the volume fraction of the metal microparticles 3 in the matrix resin 1 is preferably set to be 0.05% to 23%. Herein, the so-called "volume fraction" refers to a value in percentage that indicates a ratio of a total volume of the metal microparticles 3 to a certain volume of the nanocomposite material 20. If the voluem fraction of the metal microparticles 3 is less than 0.05%, the intensity of the LSPR absorption spectrum is very low, and it is difficult to achieve the effect of the present invention. On another hand, if the volume fraction exceeds 23%, the spacing (interparticle distance L) between the adjacent metal microparticles 3 adjacent metal microparticles 3 is less than the particle diameter $D_L$ of a larger on of the adjacent metal microparticles 3, so it is difficult to obtain a sharp peak of the LSPR absorption spectrum.

In the nanocomposite material 20 of this embodiment, preferably, the metal microparticles 3 interact with light to generate LSPR. The wavelength range for generating the LSPR varies with the particle diameters D, parciticle shape of the metal microparticles 3, the metal species, the interparticle distance L, and the refractive index of the matrix resin 1, and preferably the light with a wavelength of greater than and equal to 380 nm is used to cuase the LSPR.

2d) At least a part of the metal microparticles 3 have a portion embeded in the matrix resin 1 and a portion (exposed portion 3a) exposed out of the matrix resin 1, and a bonded chemical species 7 is immobilized at the exposed portion. As the metal microparticles 3 have a portion embedded in the matrix resin 1, the metal microparticles 3 are firmly immobilized on the matrix resin 1 by means of the anchoring effect. In addition, as the metal microparticles 3 include the exposed portion 3a, the bonded chemical species 7 can be immobilized on the exposed portion 3a. Therefore, preferably, all the metal microparticles 3 that are immobilized on the matrix resin 1 have the exposed portion 3a, and are the metal microparticles 3 having a bonded chemical species 7 immobilized thereon. Metal microparticles 3 that are completely embedded in the matrix resin 1 and have no bonded chemical species 7 immobilized thereon may also be present. As for the ratio of the metal microparticles 3 having the exposed portion 3a, for example, relative to the surface area of the matrix resin 1, the ratio of the total area of the exposed portion 3a is preferably 0.1% to 20%.

2e) The bonded chemical species 7 that are immobilized on the metal microparticles 3 has a functional group that can interact with a specific substance. In the following, the bonded chemical species 7 is described in detail.

<Bonded chemical species>

In the nanocomposite material 20 of the embodiment, the bonded chemical species 7 may be defined as a substance having a functional group X that can be bonded to, for example, the metal microparticles 3 and a functional group Y that can interact with a specific substance such as a detection object molecule. The bonded chemical species 7 is not limited to be a single molecule, and may include a substance such as a composite substance containing, for example, two ore more compositions. At the exposed portion 3a of the metal microparticles 3, the bonded chemical

species 7 is immobilized through bonding of the functional group X and the metal microparticles 3. In this case, the bonding of the functional group X and the metal microparticles 3 refers to, for example, chemical bonding and physical bonding such as adsorption. In addition, the interaction between the functional group Y and the specific substance refers to, besides chemical bonding and physical bonding such as adsorption, partial or overall changes (modification or removal) of the functional group Y.

The functional group X of the bonded chemical species 7 is immobilized on the surface of the metal microparticles 3 to obtain a functional group, may be a functional group that is immobilized on the surface of the metal microparticles 3 by means of chemical bonding, and may also be a functional group obtained by immobilizing by means of adsorption. Such functional group X may be, for example, a monovalent group such as -SH, $-NH_2$, $-NH_3X$ (in which X is a halogen atom), -COOH, $-Si(OCH_3)_3$, $-Si(OC_2H_5)_3$, $-SiCl_3$, and $-SCOCH_3$, and a divalent group such as $-S_2-$ and- $S_4$-, among which, a functional group containing sulfur atom such as a mercapto group, a thioether group or a dithioether group.

In addition, the functional group Y of the bonded chemical species 7 may be, for example, a substituent that can be boned to an inorganic compound such as metal or metal oxide or an organic compound DNA (Deoxyribonucleic Acid) or protein, or for example, a leaving group that can leave by using an acid or alkali. The functional group Y that can perform such interaction may be, for example, -SH, $-NH_2$, $-NR_3X$ (in which, R is hydrogen atom or a C1-16 alkyl, and X is a halogen atom), -COOR (in which, R is hydrogen atom or a C1-16 alkyl), $-Si(OR)_3$ (in which, R is a C1-16 alkyl), $-SiX_3$ (in which, X is a halogen atom), -SCOR (in which, R is a C1-16 alkyl), -OH, $-CONH_2$, $-N_3$, -CR=CHR' (in which, R and R' independently represents hydrogen atom or a C1-16 alkyl), -C≡CR (in which, R independently represents hydrogen atom or C1-16 alkyl), $-SO_3^-X$ (in which, X is an alkali metal), $-PO(OH)_2$, -COR (in which, R is a C1-16 alkyl), N-hydroxysuccinimide (-NHS), a biotin group (-Biotin), imidazolyl, hydroquinolyl, and $-SO_2CH_2CH_2X$ (in which, X is halogen atom, $-OSO_2CH_3$, $-OSO_2C_6H_4CH_3$, $-OCOCH_3$, $-SO_3^-$ or pyridinium).

Specific examples bonded chemical species 7 may include, for example, $HS-(CH_2)_n-OH$ (in which, n=11, 16), $HS-(CH_2)_n-COOH$ (in which, n=10, 11, 15), $HS-(CH_2)_n-COO-NHS$ (in which, n=10, 11, 15), $HS-(CH_2)_n-NH_2{\cdot}HCl$ (in which, n=10, 11, 16), $HS-(CH_2)_{11}-NHCO-Biotin$, $HS-(CH_2)_{11}-N(CH_3)_3^+Cl^-$, $HS-(CH_2)_n-SO_3^-Na^+$ (in which, n=10, 11, 16), $HS-(CH_2)_{11}-PO(OH)_2$, $HS-(CH_2)_{10}-CH(OH)-CH_3$, $HS-(CH_2)_{10}-COCH_3$, $HS-(CH_2)_n-N_3$ (in which, n=10, 11, 12, 16, 17), $HS-(CH_2)_n-CH=CH_2$ (in which, n=9, 15), $HS-(CH_2)_4-C{\equiv}CH$, $HS-(CH_2)_n-CONH_2$ (in which, n=10, 15), $HS-(CH_2)_{11}-(OCH_2CH_2)_n-OCH_2-CONH_2$ (in which, n=3, 6), and $HO-(CH_2)_{11}-S-S-(CH_2)_{11}-OH$, $CH_3-CO-S-(CH_2)_{11}-(OCH_2CH_2)_n-OH$ (in which, n=3, 6).

Other examples of the bonded chemical species 7 may include, for example, heterocyclic compounds having an amino group or a mercapto group such as 2-amino-1,3,5-triazine-4,6-dithiol, 3-amino-1,2,4-triazol-5-thiol, 2-amino-5-trifluoromethyl-1,3,4-thiadiazole, 5-amino-2-mercaptobenzimidazole, 6-amino-2-mercaptobenzothiazole, 4-amino-6-mercaptopyrazolo[3,4-d]pyrimidine, 2-amino-4-methoxybenzothiazole, 2-amino-4-phenyl-5-tetradecylthiazole, 2-amino-5-phenyl-1,3,4-thiadiazole, 2-amino-4-phenylthiazole, 4-amino-5-phenyl-4H-1,2,4-triazol-3-thiol, 2-amino-6-(methylsulfonyloxy)benzothiazole, 2-amino-4-methylthiazole, 2-amino-5-(methylthio)-1,3,4-thiadiazole, 3-amino-5-methylthio-1H-1,2,4-thiazole, 6-amino-1-methyluracyle, 3-amino-5-nitrobenzisothiazole, 2-amino-1,3,4-thiadiazole, 5-amino-1,3,4-thiadiazole-2-thiol, 2-aminothiazole, 2-amino-4-thiazole acetic acid, 2-amino-2-thiazoline, 2-amino-6-thiocyanatobenzothiazole, DL-α-amino-2-thiophene acetic acid, 4-amino-6-hydroxy-2-mercaptopyrimidine, 2-amino-6-mercaptopurine, 4-amino-5-(4-pyridyl)-4H-1,2,4-triazol-3-thiol, $N^4$-(2-amino-4-pyrimidinyl)sulfanilamide, 3-aminorhodanine, 5-amino-3-methylisothiazole, 2-amino-α-(methoxyimino)-4-thiazole acetic acid, thioguanine, 5-aminotetrazole, 3-amino-1,2,4-triazine, 3-amino-1,2,4-triazol, 4-amino-4H-1,2,4-triazol, 2-aminopurine, aminopyrazine, 3-amino-2-pyrazine carboxylic acid, 3-aminopyrazole, 3-aminopyrazole-4-carbonitrile, 3-amino-4-pyrazole carboxylic acid, 4-aminopyrazolo[3,4-d]pyrimidine, 2-aminopyridine, 3-aminopyridine, 4-aminopyridine, 5-amino-2-pyridinecarbonitrile, 2-amino-3-pyridinemaldehyde, 2-amino-5-(4-pyridyl)-1,3,4-thiadiazole, 2-aminopyrimidine, 4-aminopyrimidine, and 4-amino-5-pyrimidinecarbonitrile; or a silane coupling agent having an amino group or a mercapto group such as 3-aminopropyltriethoxysilane, 3-aminopropyltriethoxysilane, N-2-(aminoethyl)-3-aminopropyltriethoxysilane, N-2-(aminoethyl)-3-aminopropylmethyldimethoxysilane, 3-triethoxysilanyl-N-(1,3-dimethylbutylene)propylamine, N-phenyl-3-aminopropyltriethoxysilane, 3-mercaptopropyltriethoxysilane, 3-mercaptopropyltrimethoxysilane, N-2-(mercaptoethyl)-3-mercaptopropyltrimethoxysilane, N-2-(mercaptoethyl)-3-mercaptopropylmethyldimethoxysilane, 3-triethoxysilanyl-N-(1,3-dimethylbutylene)propylmercapto and N-phenyl-3-mercaptopropyltrimethoxysilane. In addition, the bonded chemical species 7 is not particularly limited, and may be used alone, or two or more of the bonded chemical species 7 may be used in combination.

In addition, the molecular backbone of the bonded chemical species 7 may be a backbone having a linear, brancked or cyclic structure containing, between the functional group X and the functional group Y, a atom selected from the group consisting of a carbon atom, an oxygen atom, and a nitrogen atom, for example, a backbone having linear portion with 2 to 20, preferably 2 to 15, and more preferably 2 to 10 carbon atoms, and may also be a backbone formed by using a single molecular species or two or more molecular species. As a preferred example used in an aspect, when the detection object molecules can be effectively detected, the thickness of a monomolecular film (or monolayer) formed by the bonded chemical species 7 is in the range of about 1.3 nm to 3 nm. From this point of view, preferably, the bonded chemical species 7 has a molecular backbone of C11-20 alkyl chain and is immobilized on the surface of

the metal microparticles 3 by menas of the functional group X, and the long alkyl chain extends from the surface in a substantially perpendicular manner to form a monomolecular film (or monolayer), so that it is generally considered that the functional group Y can be filled on the surface wehre the monomolecular film (or monolayer) is formed. Preferably, the bonded chemical species 7 may be a well-known thiol compound that is used as a reagent for forming a self-assembly monolayer (SAM).

The bonded chemical species 7 may serve as a ligand that can specifically bond with a detection object substance (analyte), so that the nanocomposite material 20 having the foregoing structures can be used in uses such as affinity biosensor. For example, as shown in FIG. 7, a nanocomposite material 20 having a ligand serving as the bonded chemical species 7 at the exposed portion 3a of the metal microparticles 3 is prepared. The ligand 7A can specifically bond with an analyte 30. Next, as shown in FIG. 8, a sample containing the analyte 30 and a non-detection object substance 40 is contacted with a nanocomposite material 20 with the ligand 7A that can bonded with the metal microparticles 3, specific bonding between the analyte 30 and the ligand 7A is generated. In addtion, the non-detection object substance 40 that cannot specifically bonded with the ligand 7A does not bonded with the ligand 7A. By comparing a nanocomposite material 20 with a ligand 7A that is bonded with the analyte 30 with a nanocomposite material 20 with a ligand 7A that is not bonded with the analyte 30 but merely bonded with the nanocomposite material 20, when being irradiated by light, the LSPR absorption spectrum changes. That is, color development changes. In this way, by detecting the changes of the LSPR absorption spectrum, the analyte 30 in a sample can be detected at a high sensitivity. The affinity biosensors using LSPR need not to use any labeling substance, and can be widely used in many fields as a biological sensing technology with a simple structure.

<Production method>

A production of the nanocomposite material 20 of this embodiment is described hereinafter. The production of the nanocomposite material 20 includes (1) a step of forming a resin film containing metal ions (or metal salts); (2) a reduction step; (3) an etching step; and a (4) a step of immobilizing a bonded chemical species 7. Herein, the matrix resin 1 containing a polyimide resin is taken as an example for exemplary description.

(1) Step of forming the resin film containing metal ions (or metal salts):

First, a polyamic acid resin film (or polyamic acid resin layer) containing metal ions (or metal salts) is prepared. The polyamic acid resin film (or polyamic acid resin layer) containing metal ions (or metal salts) may be prepared through the following film casting method or alkali modification method.

Film casting method

The film casting method is a method of casting a polyamic acid resin solution containing a polyamic acid resin on any substrate to form a polyamic acid resin film, and the polyamic acid resin film containing metal ions (or metal salts) may be formed through any one of the following methods (I) to (III):

(I) a method of casting a coating solution containing polyamic acid and a metal compound on any substrate to form a polyamic acid resin film containing metal ions (or metal salts);
(II) a method of casting a polyamic acid resin solution free of any metal ions (or metal salts) on any substrate to form a polyamic acid resin film, and impregnating the polyamic acid resin film in a solution containing metal ions (or metal compound) (recorded as metal ion solution hereinafter); and
(III) a method of impregnating the polyamic acid resin film containing metal ions (or metal salts) formed by the method (I) in the metal ion solution.

In view of the ease in controlling the thickness of the metal microparticle layer 5 or the matrix resin 1 or the chemical structure of the polyimide resin, the method is not particularly limited, but in view of ease in application, the film casting method is suprior to the following alkali modification method.

The method (I) has the following advantages: the content of the metal compound in the polyamic acid resin solution can be easily adjusted, so the metal content in the nanocomposite material 20 can be easily adjusted; or, the nanocomposite material 20 containing larger metal microparticles 3 with the particle diameters D of greater than 30 nm can be easily fabricated. That is, in the method (I), the particle diameters D may be controlled in the range of 30 nm to 100 nm.

The method (II) has the following advantages: since the polyamic acid resin film is impregnated with the metal ions (or metal compound) that are uniformly dissolved, and the metal ions (or metal salts) are uniformly dispersed in the polyamic acid resin film with less variation; so the nanocomposite material 20 containing the metal microparticles 3 with

smaller particle diameter distribution can be fabricated.

When the nanocomposite material 20 is stripped from the substrate and applied to a sensor or when the substrate is attached with the nanocomposite material 20 and the light-reflecting LSPR is used, the substrate used in the film casting method is not particularly limited. When the substrate is attached with the nanocomposite material 20 and the light-reflecting LSPR is used, the substrate is preferably light-transmissive, and may be, for example, a glass substrate or a substrate made of transparent synthetic resin. The transparent synthetic resin may be, for example, a polyimide resin, a PET resin, an acrylic acid resin, MS resin, MBS resin, ABS resin, a polycarbonate resin, a siloxane resin, an epoxy resin.

The well-known polyamic acid resin obtained from a well-known anhydride and diamine may be used as a polyimide resin precursor, namely, polyamic acid resin (referred to as "precursor" hereinafter). The polyamic acid may be obtained by dissolving, for example, equimolar amount of tetracarboxylic dianhydride and diamine in an organic solvent, and stirring for about 30 min to 24 hours at a temperature in the range of 0°C to 100°C for polymerization. During the reaction, the obtained polyamic acid resin is preferably in the range of 5 wt% to 30 wt% in the organic solvent, and more preferably in the range of 10 wt% to 20 wt% to dissolve the reaction components. The organic solvent used in the polymerization is preferably a polar organic solvent, and may be, for example, N,N-dimethylformamide, N,N-dimethylacetyl acetamide (DMAc), N-methyl-2-pyridinone, 2-butanone, dimethylsufoxide, dimethyl sulfate, cyclohexanone, dioxane, tetrahydrofuran, diethylene glycol dimethyl ether , triethylene glycol dimethyl ether. Two or more of the solvents may be used in combination; and in addition, some aromatic hydrocarbons such as xylene and toluene may be used.

The synthesized polyamic acid resin is made into a solution for use, and preferably, made into a reaction solvent solution for use, which may be optionally concentrated, diluted or replaced by other organic solvents. The solution adjusted in this manner may be used as a coating solution after the metal compound is added.

The polyamic acid resin is preferably selected to enable the imidized polyimide resin to contain a thermoplastic or low-thermal expansion polyimide resin. Besides, the polyimide resin may include, for example, heat-resistant resins containing a polymer having an imide group in the structure, such as polyimide, polyamide imide, polybenzimidazole, polyimide ester, polyether imide, and polysiloxane imide.

In this embodiment, the diaminine that is prefrably used for preparing the polyamic acid resin is the same as that exemplified in the first embodiment.

In this embodiment, the anhydride that is prefrably used for preparing the polyamic acid resin is the same as that exemplified in the first embodiment.

The diamine and anhydride may be used alone, or two or more types of diamine and anhydride may be used in combination. In addition, other types of diamine and anhydride may also be used.

In this embodiment, in order to prepare the coating solution containing the metal compound or the polyamic acid resin solution free of metal ions (or metal salts), commercially available solutions containing polyamic acid resin sold may also be used. The polyamic acid solution to be used as a thermoplastic polyimide resin precursor may be, for example, thermoplastic polyamic acid resin vanish SPI-200N (trade name) manufactured by Nippon Steel Chemical Co., Ltd., thermoplastic polyamic acid resin vanish SPI-300N (trade name) manufactured by Nippon Steel Chemical Co., Ltd., thermoplastic polyamic acid resin vanish SPI-1000G (trade name) manufactured by Nippon Steel Chemical Co., Ltd., and Torayneece#3000 (trade name) manufactured by TORAY Co., Ltd. In addition, the polyamic acid solution to be used as a non-thermoplastic polyimide resin precursor may be, for example, non-thermoplastic polyamic acid resin vanish U-Varnish-A (trade name) manufactured by UBE Industries Co., Ltd., and non-thermoplastic polyamic acid resin vanish U-Varnish-S (trade name) manufactured by UBE Industries Co., Ltd.

When the nanocomposite material 20 is applied to applications that light-transmitting LSPR is used, the transparent or colorless polyimide resin is preferably a polyimide resin that is not easily to form a complex due to intramolecular and intermolecular Charge Transfer (CT), for example, an aromatic polyimide resin, an alicyclic polyimide resin, a fluorine-containing polyimide resin, and a silicon polyimide resin that have a large-volume and three-dimensional substituent group. Polyimide resin that is the same as that of the first embodiment may be used.

The metal compound contained in the polyamic acid resin and coating solution that is prepared by the method (I) or the metal compound contained in the solution containing metal ions (or metal salts) that is prepared by the method (II) may be the same as that in the first embodiment.

In the coating solution containing the polyamic acid resin and the metal compound that is prepreared by the method (I), the metal compound is dissociated by means of the metal species, and a three-dimensional cross-linking formation reaction occurs between the generted metal ions and the polyamic acid resin. Therefore, the coating solution is tackified and gelated over time, and cannot be used as a coating solution. In order to prevent the coating solution from being tackified and gelated, a viscosity modifying agent is preferably added to the coating solution to serve as a stabilizer. The viscosity modifying agent is added to prevent the metal ions in the coating solution from forming a chelate complex with the polyamic acid resin; instead, the viscosity modifying agent forms a chelate complex with the metal ions. In this manner, the three-dimensional crosslinking between the polyamic acid resin and metal ions is prevented by using the viscosity modifying agent, thereby inhibiting tackifying and gelation. The viscosity modifying agent may be

the same as that in the first embodiment.

Based on the total 100 parts by weight of the solid contents of the polyamic acid resin and the metal compound, the formulation amount of the metal compound in the coating solution is set to be in the range of 3 parts by weight to 80 parts by weight, and more preferably, in the range of 20 parts by weight to 60 parts by weight. In this case, if the metal compound is less than 3 parts by weight, the metal microparticles 3 are not fully precipitated, thereby failing to generate the surface plasmon resonance; and if the metal compound is greater than 80 parts by weight, metal salts cannot be dissolved in the coating solution and are precipitated, or the metal microparticles 3 are easily to be coagulated. In addition, if the particle diameters D of the metal microparticles 3 exceed 100 nm, the LSPR cannot be generated.

In addition, in the coating solution, an optional component other than the above components may be, for example, a formulation leveling agent, a defoaming agent, an adhesion imparting agent, and a crosslinking agent.

A method for coating the coating solution containing a metal compound or the polyamic acid resin solution free of metal ions (or metal salts) is not particularly limited, and may be performed, for example, by using a scraper, a mould, a blade or a lip. Preferably, a spin coater, a gravure coater, or a rod coater that can be used to form a uniform coating film (or polyamic acid resin film) and control the thickness of matrix resin 1 with a high precision easily may be used.

Besides, in the metal ion solution used in the method (II), preferably, the concentration of the metal compound may be in the range of 30 mM to 300 mM, and more preferably, in the range of 50 mM to 100 mM. If the concentration of the metal compound is less than 30 mM, it takes a lot of time to impregnate the metal ion solution into the polyamic acid resin film, which is not desirable. If the concentration of the metal compound is greater than 300 mM, the surface of the polyamic acid resin film may be eroded (dissolved).

In addition to the metal compound, the metal ion solution may also contain other components such as a buffer for adjusting the pH value.

The method for impregnating the metal ion solution may be implemented in a manner the same as that in the first embodiment.

After being coated with the coating solution containing the metal compound or the polyamic acid resin solution free of metal ions (or metal salts) and dried, the polyamic acid resin film is formed. The drying step may be implemented in a manner the same as that in the first embodiment.

The polyamic acid resin film may have a single layer, or may have a laminated structure including a plurality of polyamic acid resin films. The plurality of layers may be formed by coating other polyamic acid resins on the polyamic acid resin layers containing different components in sequence. When at least three polyamic acid resin layers are present, the polyamic acid resin containing the same components may be used two or more times. The simple structure of two layers or single layer, especially single layer, can be obtained in the industry.

In addition, the single or plurality of polyamic acid resin layers is laminated on a sheet-shaped support member, after the single or plurality of polyimide resin layers is formed through imidization, the polyamic acid resin film may be further formed thereon. In this case, in order to improve the adhesion between the polyimide resin layer and the polyamic acid resin film layer, a surface treatment is preferably performed on the polyimide resin layer by using plasma. Through the surface treatment by using the plasma, the surface of the polyimide resin layer may be roughened, or the chemical structure of the surface may be changed. In this way, the wettability of the surface of the polyimide resin layer is improved, the affinity with the polyamic acid solution is improved, and the polyamic acid resin film can be maintained on the surface stably.

Alkali modification method

The alkali modification method may be implemented in a manner the same as that in the first embodiment. In this embodiment, the thickness of the alkali treatment layer formed by the alkali treatment is preferably in the range of 1/5000 to 1/2, and more preferably 1/3000 to 1/5, of the thickness of the polyimide film. From another point of view, the thickness of the alkali treatment layer is preferably in the range of 0.005 μm to 3.0 μm, more preferably 0.05 μm to 2.0 μm, and further more preferably from 0.1 μm to 1.0 μm. Setting the thickness in the range is beneficial to the formation of the metal microparticles 3. If the thickness of the alkali treatment layer is lower than the lower limit (0.005 μm), it is difficult to sufficiently impregnate the metal ions. On another hand, when the polyimide resin is treated with the alkali aqueous solution, the imide ring of the polyimide resin is opened, and meanwhile the outmost surface portion of the polyimide resin tends to be dissolved. Therefore, thickness is difficult to exceed the upper limit (3.0 μm). In addition, when the metal microparticles 3 are substantially dispersed in a plane, the thickness of the alkali treatment layer formed by the alkali treatment is preferably in the range of 1/5000 to 1/20, and more preferably in the range of 1/500 to 1/50, of the thickness of the polyimide film. In addition, from another point of view, the thickness of the alkali treatment layer is preferably in the range of 20 nm to 150 nm, more preferably in the range of 50 nm to 150 nm, and further more preferably in the range of 100 nm to 120 nm. Setting the thickness in the range is beneficial to the formation of the metal microparticles 3.

In the "polyamic acid resin film or polyamic acid resin layer containing metal ions or metal salts" (hereinafter

referred to as the "polyamic acid layer containing metal ions") formed through the film casting method or alkali modification method, the metal ions may interact with the carboxyl of the polyamic acid and be attached to the carboxyl group, or a complex may be formed. Such phenomenon takes effect by homogenizing the concentration distribution of the metal ions in the polyamic acid layer containing the metal ions. Therefore, non-uniform distribution or coagulation of the metal microparticles 3 precipitated in the matrix resin 1 is prevented, and the metal microparticles 3 having uniform shapes are precipitated with uniform distribution.

(2) Reduction step

In the reduction step, heat treatment is performed on the polyamic acid layer containing metal ions obtained in the foregoing manners, preferably at a temperature of higher than 140°C, and more preferably in the range of 160°C and 450°C, and still more preferably in the range of 200°C and 400°C, so that the metal ions (or metal salts) are reduced and the metal microparticles 3 are precipitated. If the temperature of the heat treatment is lower than 140°C, the metal ions (or metal salts) are not fully reduced, and it is difficult to set the mean particle diameter of the metal microparticles to be greater than and equal to the lower limit (3 nm). Besides, if the temperature of the heat treatment is lower than 140°C, heat diffusion of the metal microparticles 3 precipitated through reduction in the matrix resin 1 may be insufficient. Further, if the temperature of the heat treatment is lower than 140°C, when a polyimide resin is used as the matrix resin 1, the polyamic acid resin, as a polyimide resin precursor, may not be fully imidized, and the imidizing step needs to be performed again by heating. In another aspect, if the temperature of the heat treatment exceeds 450°C, the matrix resin 1 may be decomposed due to heat, and along with the decomposition of the matrix resin 1, new absorption other than the absorption from the LSPR may be easily caused; or the spacing between adjacent metal microparticles 3 may be decreased, and as a result, the adjacent metal microparticles 3 may interact with each other, resulting in a wider LSPR absorption spectrum.

The heat treatment time may be determined according to a target interparticle distance, the temperature of the heat treatment, and the content of the metal ions (or metal salts) in the polyamic acid layer containing metal ions. For example, if the temperature of the heat treatment is 200°C, the heat treatment time may be set to be in the range of 10 minutes to 180 minutes; if the temperature of the heat treatment is 400°C, the heat treatment time may be set to be in the range of 1 minute to 60 minutes.

The particle diameters D and the interparticle distance L of the metal microparticles 3 may be controlled by the heating temperature and heating time in the reduction step, and the content of the metal ions (or metal salts) in the matrix resin 1 (or a precursor resin layer thereof). The inventors of the present invention have the following viewpoint: if the heating temperature and heating time in the heat-reduction are fixed, and the absolute content of the metal ions (or metal salts) in the matrix resin 1 (or in the precursor resin layer thereof) varies, the particle diameters D of the precipitated metal microparticles 3 vary. In addition, the inventors also have the following viewpoint: when the heating temperature and heating time of the heat-reduction are not controlled, the interparticle distance L may be less than a particle diameter $D_L$ of a larger one of adjacent metal microparticles, or the metal microparticles 3 are coagulated on the surface S of the matrix resin 1 to form islands.

Based on the viewpoints, the particle diameters D of the metal microparticles 3 may be controlled by controlling the heating temperature; the interparticle distance L may be controlled by controlling the heating time. These points of view are specifically illustrated based on examples. For example, in the polyamic acid resin layer (a resin layer of a precursor of the matrix resin 1) with a thickness of 200 nm, heat-reduction in atmosphere is performed on gold ions with a content of 18 wt% per cubic centimeter (5.2 μg per square centimeter), the particle diameters D and the interparticle distance L of the metal gold microparticles formed through heat-reduction vary with the heating temperature and heating time. That is, the particle diameters D are about 9 nm (the mean particle diameter is about 9 nm) when the treatment is performed for 10 minutes at 200°C; the particle diameters D are about 13 nm (the mean particle diameter is about 13 nm) when the treatment is performed for 3 minutes at 300°C; and the particle diameters D are about 15 nm (the mean particle diameter is about 15 nm) when the treatment is performed for 1 minute at 400°C. In any case, the nanocomposite material is formed under the condition that the spacing between adjacent metal gold microparticles is greater than and equal to the particle diameter of a larger one of the adjacent metal gold microparticles (which is approximately close to the particle diameter D). Based on the foregoing examples, the thickness of the metal microparticle layer 5 is controlled in the above range, so as to form a nanocomposite material 20 meeting the above requirements.

In addition, by applying the above viewpoints, the heat treatment in the reduction step may also be divided into a plurality of steps. For example, the following steps may be performed: a particle diameter control step of controlling the metal microparticles 3 to grow to a specified particle diameters D at a first heating temperature, and an interparticle distance control step of maintaining the interparticle distance L of the metal microparticles 3 until the interparticle distance L reaches a specified range at a second heating temperature which is the same as or different from the first heating temperature. In this manner, the particle diameters D and the interparticle distance L may be controlled more precisely by adjusting the first and second heating temperature as well as the heating time.

The heat-reduction is adopted as the reduction method because the heat-reduction has the following industrial advantages: the particle diameters D and the interparticle distance L can be easily controlled by controlling the treatment conditions of reduction (especially the heating temperature and heating time); or simple devices may be used in the lab scale to production scale without any limitation; moreover, the heating-reduction can be applied to single or continuous mode without any specific research. The heat-reduction may be carried out in an inert gas atmosphere such as Ar and $N_2$, or in vacuum or atmosphere of 1 KPa to 5 KPa. The gas-phase reduction using reducing gases such as hydrogen or photo-reduction (ultraviolet) is undesirably used as the reduction method. In gas-phase reduction, no metal microparticle 3 is formed near the surface S of the matrix resin 1, and the reducing gas promotes thermal decomposition of the matrix resin; and therefore, it is difficult to control the particle spacing of the metal microparticles 3. In addition, in photo-reduction, due to the transmittance of the matrix resin 1, the metal microparticles 3 near the surface and those in the deep portion may have non-uniform densities; and therefore, it is difficult to control the particle diameters D and (interparticle distance L of the metal microparticles 3, and the reduction efficiency is low.

In the reduction step, the imidization of the polyamic acid may be conducted by using the heat in the reduction treatment, and therefore, the steps from precipitation to imidization of the metal microparticles 3 may be carried out by a one-pot process, thereby simplifying the production steps.

In the heat-reduction, the metal ions (or metal salts) in the matrix resin 1 (or the precursor resin layer thereof) are reduced, and the metal microparticles 3 are independently precipitated by means of heat diffusion. The metal microparticles 3 thus formed maintain an interparticle distance L greater than and equal to a certain value, and have shapes that are substantially uniform, and the metal microparticles 3 are uniformly dispersed in the matrix resin 1 in a three-dimensional manner. Especially, when the metal ions (or metal salts) in the polyamic acid resin layer containing metal ions are adsorbed on the carboxyl group of the polyamic acid resin, or a complex is formed, the shapes or particle diameters D of the metal microparticles 3 are homogenized, so that a nanocomposite material 20 in which the metal microparticles 3 are uniformly precipitated and dispersed in the matrix resin 1 with the substantially uniform interparticle distance L is obtained. In addition, by controlling resin structure units that form the matrix resin 1 or controlling the absolute amount of the metal ions (or metal salts) and the volume fraction of the metal microparticles 3, the particle diameters D of the metal microparticles 3 and the distribution state of the metal microparticles 3 in the matrix resin 1 may also be controlled.

(3) Etching step

In the etching step, a part of the metal microparticles 3 in the matrix resin 1 of the nanocomposite material 20 may be exposed from the surface S of the matrix resin 1. For example, in the nanocomposite material 20, the surface of the matrix resin 1 at a side where the metal microparticles 3 are required to be exposed is removed by etching. The etching method may be, for example, a wet etching method using a hydrazide solution or an alkali solution, or a dry etching method using plasma treatment.

In the wet etching method, for example, in view of the hight permeability of the etching solution, a desired matrix resin adopted in the etching using an alkali solution may be a matrix resin with a high water absorption rate, and the water absorption rate is preferably higher than 0.1%, and more preferably higher than 0.2%.

In the dry etching method, for example, in view of the hight reactivity with gases in a plasma state, a desired matrix resin adopted in the etching using plasma may be a matrix resin containing a halogen atom and a polar group such as -OH, -SH, -O, -S-, -SO-, -NH-, -CO-, -CN, -P=O. -PO-, $-SO_2-$, -CONH-, and $-SO_3H$. In addition, from another point of view, like the etching using an alkali solution, the matrix resin with a high water absorption rate is desirable, and the water absorption rate is preferably higher than 0.1%, and more preferably higher than 0.2%.

(4) Step of immobilizing the bonded chemical species

In the step of immobilizing the bonded chemical species 7, the bonded chemical species 7 is immobilized on the surface of the exposed portion 3a of the metal microparticles 3 that is exposed out of the matrix resin 1. The immobilization step may be performed by contacting the bonded chemical species 7 with the surface of the exposed portion 3a of the metal microparticles 3. Preferably, for example, the surface treatment of the metal microparticles 3 is performed in a treatment solution with the bonded chemical species 7 dissolved in a solvent. The solvent for dissolving the bonded chemical species 7 may be, but not limited to, for example, water, a C1-8 hydrocarbon alcohol such as methanol, ethanol, propanol, isopropanol, butanol, t-butanol, pentanol, hexanol, heptanol, and octanol; a C3-6 hydrocarbon ketone such as acetone, propanone, methylethyl ketone, pentanone, hexanone, methylisobutyl ketone, and cyclohexane; a C4-12 hydrocarbon ether such as diethyl ether, ethylene glycol dimethyl ether, diethylene glycol dimethyl ether, diethylene glycol diethyl ether, diethylene glycol dibutyl ether, and tetrahydrofuran; a C3-7 hydrocarbon ester such as methyl acetate, ethyl acetate, propyl acetate, butyl acetate, of γ-butyrolactone, diethyl malonate; a C3-6 amide such as dimethyl formamide, dimethyl acetyl amine, tetramethyl urea, hexamethyl phosphoric triamide; a C2 sulfoxide compound such as dimethyl sulfoxide; a C1-6 halogen-containing compound such as methyl chloride, methyl bromide, methylene chloride, chloroform, carbon tetrachloride, dichloroethane, 1,2-dichloroethane, 1,4-dichlorobutane, trichloroethane, chlorobenzene, o-dichloro-benzene; and a C4-8 hydrocarbon such as butane, hexane, heptane, octane, benzene, toluene, and xylene.

The concentration of the bonded chemical species 7 in the treatment solution is preferably 0.0001 M to 1 M (mol/L), and it is generally considered that a low concentration is beneficial to attaching redundant bonded chemical species 7 to the surface of the metal microparticles 3; and when a sufficient film formation effect generated by the bonded chemical species 7 is required, the concentration of the bonded chemical species 7 is more preferably in the range of 0.05 M to 0.005 M.

A method for treating the surface of the metal microparticles 3 by using the treatment solution is not particularly limited, provided that the treatment solution can contact, and preferably uniformly contact with the surface of the metal microparticles 3 on the whole surface of the treatment surface. For example, the metal microparticles 3 with the exposed portion 3a are impregnated in the matrix resin 1 and the treatment solution. In addition, the metal microparticles 3 with the exposed portion 3a may be blew onto the exposed portion 3a of the metal microparticles 3 in the matrix resin 1 through spraying, and may also be coated by using a suitable tool. In addition, at this time, the temperature of the treatment solution is preferably in the range of -20°C to 100°C, and more preferably in the range of -10°C to 50°C. For example, when the surface treatment adopts the impregnation method, the impregnation time is preferably set to be 1 minute to 24 hours.

After the surface treatment is ended, preferably, a washing step of removing redundant bonded chemical species 7 that is attached on the surface of the metal microparticles 3 by dissolving with an organic solvent. An organic solvent that can be used to dissolve the bonded chemical species 7 is used as the solvent used in the washing step. As an example, the above solvents may be used.

A method of using an organic solvent to wash the surface of the metal microparticles 3 in the washing step is not limited. The metal microparticles 3 may be immersed in the solvent. In addition, the metal microparticles 3 may be blew by spraying and rinsed, and the metal microparticles 3 may also be penetrated into a suitable substrate and wiped. In washing, although the redundant bonded chemical species 7 that is attached on the surface of the metal microparticles 3 is removed, but all the bonded chemical species 7 cannot be removed. It is benefit that the bonded chemical species 7 is removed in such a manner that the thickness the film of the bonded chemical species 7 on the surface of the metal microparticles 3 forms a monomolecular film. The method includes: first, setting a step of washing with water before the washing step; next, performing the washing step; then, further setting a step of washing with water. At this time, the temperature of the solvent in the washing step is preferably in the range of 0°C to 100°C, and more preferably in the range of 5°C to 50°C. In addition, the washing time is preferably in the range of 1 second to 1000 seconds, and more preferably in the range of 3 seconds to 600 seconds. The amount of the solvent is preferably in the range of 1 L to 500 L, and more preferably in the range of 3 L to 50 L, relative to per 1 $m^2$ surface area of the nanocomposite material 20.

In addition, an alkali aqueous solution is optionally used to remove the bonded chemical species 7 that is attached on the surface of the matrix resin 1. At this time, the concentration of the used alkali aqueous solution is preferably 10 mM to 500 mM (mmol/L), and the temperature is 0°C to 50°C. For example, when being impregnated in the alkali aqueous solution, the impregnation time is preferably set to be 5 seconds to 3 minutes.

In the above manner, a nanocomposite material 20 having a structure shown in FIG. 5 can be fabricated. In addition, as the matrix resin 1, even when a resin other than the polyimide resin (polyamic acid resin) is used, the above production method may also be used.

In addition, when fabricating the nanocomposite material 20, in addition to steps (1) to (4), any step such as the following patterning step may be performed.

Patterning step

This step may be performed between the foregoing (2) reduction step and the foregoing (3) etching step, or between the foregoing (3) etching step and the foregoing (4) step of immobilizing the bonded chemical species, and may be performed at any time after the foregoing (4) step of immobilizing the bonded chemical species.

The patterning may be implemented through a combination of a photolithography technology and etching, and performed in the following sequence. First, a substrate formed by laminating the nanocomposite material 10 on any substrate is prepared. The foregoing substrate may be used as the substrate herein. A resist liquid is coated on the nanocomposite material 10 and dried, to form a resist layer. Then, a mask with a specified pattern is used to expose the resist layer, and development is performed, so that a pattern is formed on the resist layer on the nanocomposite material 10. The resist layer formed with the pattern is used as a shielding, and a part of the nanocomposite material 10 not shielded by the etching resist layer is removed through a method the same as that of the etching step. The etching is performed until the substrate is exposed. Then, the resist layer is removed to obtain the patterned nanocomposite material on the substrate. The patterned nanocomposite material is preferably used in multi-channel sensing devices,

and applied in use such as plasmon waveguide for displaying LSPR microstructures or micro-optical components.

Next, the present invention is specifically described through the examples, but is not limited thereto in addition, in the examples of the present invention, unless otherwise specified, various measurement and assessment are performed in the following manners.

[Measurement of mean particle diameter of the metal microparticles]

The mean particle diameter of the metal microparticles is measured through cutting a section of a sample into ultrathin sections by using a slicing machine (Ultra-Cut UTC ultrathin slicing machine manufactured by Leica Company) and observing by using a TEM (JEM-2000EX manufactured by JEOL Company). In addition, it is difficult to observe the sample made on the glass substrate by the foregoing method, so the observation is performed on the sample fabricated with the same condition on the polyimide film. Besides, the mean particle diameter of the metal microparticles is set to be an area mean diameter.

[Measurement of diameter of exposed area of the metal microparticles]

The diameter of exposed area of the metal microparticles is measured through observing the surface of the sample by using a Field Emission-Scanning Electron Microscope (FE-SEM, manufactured by Hitachi High-Technologies Corporation).

[Measurement of absorption spectrum of the sample]

The absorption spectrum of the fabricated sample is observed through ultraviolet, visible and near-infrared spectrometry (by using U-4000 manufactured by Hitachi Ltd.).

[Measurement of transmittance]

The transmittance is measured through ultraviolet and visible spectroscopic analysis (by using UV-vis V-550 manufactured by JASCO Inc., Japan).

[Measurement of coefficient of thermal expansion (CTE)]

The CTE is measured by using a thermo-mechanical analyzer (manufactured by Seiko Instruments Inc.). The temperature is raised to 250°C and then maintained for 10 minutes; then cooling is performed at a rate of 5°C/minute, so as to calculate the mean CTE from 240°C to 100°C.

[Measurement of water absorption rate]

The water absorption rate is measured by drying the sample at a temperature of 80°C for two 2 hours, and detecting a mass a of the dried sample; then, placing the dried sample at a temperature of 23°C and a humidity of 50% 24 hours (environmental test), and detecting a mass b of the sample. The water absorption rate is calculated by using the detected mass of the sample according to the following Equation (A):

**[00207]** $$[\text{Water absorption rate } (\%)] = \{(\text{weight b} - \text{weight a})/\text{weight a}\} \times 100 \qquad (A)$$

Synthesis Example 1

In a 500 ml separable flask, 15.24 g, 47.6 mmol of 2,2'-bis(trifluoromethyl)-4,4'-diamine biphenyl (TFMB) was dissolved in 170 g of DMAc with stirring. Next, under a nitrogen flow, 14.76 g, 47.6 mmol of 4,4'-oxydiphthalic anhydride (ODPA) was added to the solution, and continuously stirred at room temperature for 4 hours for polymerization, to obtain a colorless and sticky polyamic acid resin solution $S_1$. The viscosity of the obtained polyamic acid solution $S_1$ was measured was measured to be 3251 cP (25°C) by using an E-type viscometer (DV-II+Pro CP model, manufactured by Brookfield Company). The weight average molecular weight (Mw) was measured to be 163,900 by using Gel Permeation Chromatograph (GPC) (HLC-8220GPC manufactured by Tosoh Co., Ltd.).

The obtained polyamic acid resin solution $S_1$ was coated on a stainless steel substrate, and dried for 3 minutes

at 125°C. Then, stage heat treatment was performed at 160°C for 2 minutes, at 190°C for 30 minutes, at 200°C for 30 minutes, at 220°C for 3 minutes, at 280°C for 1 minute, at 320°C for 1 minute and at 360°C for 1 minute respectively, to complete imidization, so as to obtain a polyimide film laminated on the stainless steel substrate. The polyimide film was stripped from the stainless steel substrate, to obtain a polyimide film $P_2$ with a thickness of 10 μm. The transmittance of the film under 400 nm was 95%, and the mean transmittance of visible light was 96%. The water absorption rate of the film was 0.35%

Fabrication Example 1

An alkali-free glass (AN-100 manufactured by Asahi Glass Co., Ltd) test piece with a size of 10 cm x 10 cm (with a thickness of 0.7 mm) was processed for 5 minutes by using a 5 N sodium hydroxide aqueous solution at 50°C. Then, the glass substrate of the test piece was washed with pure water and dried, and then immersed in a 1 wt% 3-aminopropyltriethoxysilane (referred to as "γ-APS") aqueous solution. The glass substrate was taken out from the γ-APS aqueous solution and dried, and heated for 5 minutes at 150°C, to fabricate a glass substrate G1.

Fabrication Example 2

An alkali-free glass (AN-100 manufactured by Asahi Glass Co., Ltd) test piece with a size of 10 cm x 10 cm (with a thickness of 0.7 mm) was processed for 5 minutes by using a 5 N of sodium hydroxide aqueous solution at 50°C. Then, the glass substrate of the test piece was washed with pure water and dried, was and then immersed in a 1 wt% γ-APS aqueous solution. The glass substrate was taken out from the γ-APS aqueous solution and dried, and heated for 5 minutes at 150°C, to fabricate a glass substrate G2.

Fabrication Example 3

Silica nanoparticles with the particle diameters of 40 nm to 50 nm was dilutted with isopropanol, so that the silica nanoparticles were dispersed to form a colloidal solution of silicon oxide in isopropanol (manufactured by Nissan Chemcial Co., Ltd., trade name: IPA-ST, concentration of solid contents: about 30 wt%), so as to prepare a colloidal silicon oxide solution in which the concentration of solid contents was 1 wt%.

Fabrication Example 4

1 mg of Avidin podwer reagent (trade name: Avidin from egg white, manufactured by Nacalai Tesque Inc.) was dissolved in 10 ml of a phophate buffer (a mixed aqueous solution of 150 mM sodium chloride, 7.5 mM disodium hydrogen phosphate and 2.9 mM sodium dihydrogen phophate), so as to prepare a 1.47 μM Avidin solution.

[Example 1-1]

To 2.67 g of the polyamic acid resin solution S1 obtained in Synthesis Example 1, 0.522 g of chloroauric acid tetrahydrate dissolved in 17.33 g of DMAc was added, and the solution was stirred for 15 minutes at room temperature in a nitrogen atmosphere, so as to prepare a polyamic acid resin solution containing a gold complex. The obtained polyamic acid resin solution containing a gold complex was coated on the glass substrate G1 obtained in Fabrication Example 1 by using a spin coater (SPINCOATER 1H-DX2 manufactured by Mikasa Co., Ltd.), and then dried for 3 minutes at 70°C and for 20 minutes at 130°C, to form a polyamic acid resin film containing a gold complex with a thickness of 50 nm. on the glass substrate G1. The polyamic acid resin film containing a gold complex was subjected to heat treatment for 10 minutes at 400°C in atmosphere, to fabricate a red nanocomposite film 1-1 (with a thickness of 30 nm) dispersed with gold microparticles. The metal gold microparticles formed in the nanocomposite film 1-1 were completely independent, and dispersed with a spacing of greater than and equal to the particle diameter of a larger one of adjacent metal gold microparticles and arranged in a layer. In addition, the metal gold microparticles formed in the layer have the following characteristics:

> Shape: substantially spherical shape; mean particle diameter: about 20 nm; maximum particle diameter: about 26 nm; minimum particle diameter: about 12 nm; volume fraction relative to the nanocomposite film 1-1: 3.96%; and mean interparticle distance: about 25 nm.

In addition, in the LSPR absorption spectrum generated by the metal gold particles in the nanocomposite film 1-1, an absorption peak with a crest of 546 nm and a half-value width at 102 nm was observed.

[Example 1-2]

To 2.67 g of the polyamic acid resin solution $S_1$ obtained in Synthesis Example 1, 0.522 g of chloroauric acid tetrahydrate dissolved in 17.33 g of DMAc was added, and the solution was stirred for 15 minutes at room temperature in a nitrogen atmosphere, so as to prepare a polyamic acid resin solution containing a gold complex. The obtained polyamic acid resin solution containing a gold complex was coated on the glass substrate G1 obtained in Fabrication Example 1 by using a spin coater (SPINCOATER 1H-DX2 manufactured by Mikasa Co., Ltd.), and then dried for 3 minutes at 70°C and for 20 minutes at 130°C, to form a polyamic acid resin film containing a gold complex with a thickness of 235 nm on the glass substrate G1. The polyamic acid resin film containing a gold complex was subjected to heat treatment for 120 minutes at 400°C in atmosphere, to fabricate a red nanocomposite film 1-2 (with a thickness of 140 nm) dispersed with gold microparticles. The metal gold microparticles formed in the nanocomposite film 1-2 were completely independent, and dispersed with a spacing of greater than and equal to the particle diameter of a larger one of adjacent metal gold microparticles and arranged in a layer. In addition, the metal gold microparticles formed in the layer have the following characteristics:

Shape: mixed polyhedron-shaped particles and spherical particles; mean particle diameter: about 52 nm; maximum particle diameter: about 90 nm; minimum particle diameter: about 10 nm; volume fraction relative to the nanocomposite film 1-2: 3.96%; and mean interparticle distance: about 71 nm.

In addition in the LSPR absorption spectrum generated by the metal gold particles of the nanocomposite film 1-2, an absorption peak with a crest of 554 nm and a half-value width at 133 nm was observed.

[Example 1-3]

In the same manner as that in Example 1-1, a red nanocomposite film 1-3 (having a thickness of 30 nm) dispersed with metal gold microparticles was fabricated.

A region from a plane of a surface side of the nanocomposite film 3 to the thickness of 7 nm was removed through plasma etching by using a vacuum plasma device (plasma cleaner VE-1500II manufactured by Mory Engineering Co. Ltd.), to obtain a nanocomposite film 1-3'. It was confirmed that a part of the metal gold microparticles were exposed from the plane of the surface side of the film. At this time, in the nanocomposite film 1-3', relative to the surface area of the nanocomposite film 1-3', the total area fraction of the exposed portion of the metal gold microparticles was 5.1%.

[Example 1-4]

In the same manner as that in Example 1-2, a red nanocomposite film 1-4 (having a thickness of 140 nm) dispersed with metal gold microparticles was fabricated.

A region from a plane of a surface side of the nanocomposite film 1-4 to the thickness of 7 nm was removed through plasma etching by using a vacuum plasma device (plasma cleaner VE-1500II manufactured by Mory Engineering Co. Ltd.), to obtain a nanocomposite film 1-4'. It was confirmed that a part of the metal gold microparticles were exposed from the plane of the surface side of the film. At this time, in the nanocomposite film 1-4', relative to the surface area of the nanocomposite film 1-4', the total area fraction of the exposed portion of the metal gold microparticles was 5.4%.

[Example 1-5]

In the same manner as that in Example 1-1, a nanocomposite film 1-5 (having a thickness of 30 nm) dispersed with metal gold microparticles was fabricated.

Next, after hexamethyldisilazane was coated on a surface of the nanocomposite film 1-5 through spin coating at a speed of 3000 rpm in 60 seconds, a positive liquid resist (OFPR-800LB manufactured by Tokyo Ohka Kogyo Co., Ltd.) was coated through spin coating at a speed of 2600 rpm in 16 seconds, and was dried for 90 seconds at 90°C, to form a resist film. A mask with a linear pattern of at least 10 $\mu$m was arranged on the resist film, and a resist pattern of 20 $\mu$m {width/spacing (L/S) = 10 $\mu$m/10 $\mu$m} was formed by using exposure and a developer (trade name: NMD-3, manufactured by Tokyo Ohka Kogyo Co., Ltd.), to obtain a glass substrate 1-5a having a resist pattern.

The nanocomposite film 1-5 in a region that is not shielded by the resist layer was removed from the glass substrate 1-5a through oxygen plasma treatment, and the residue was removed by using an etching solution (trade name: AURUM-302, manufactured by Kanto Chemical Co., Ltd.). Then, the resist film was fully exposed, and was dissolved by using a developer, so as to form a glass substrate 1-5b with fine patterns of a nanocomposite material dispersed with metal gold microparticles. The fine patterns in the obtained glass substrate 1-5b was assessed through observation by using a microscope (a laser microscope, trade name: VK-8500, manufactured by Keyence Corporation),

to confirm that a linear pattern of at least 10 μm was formed.

[Example 2-1]

<Fabrication step of nanocomposite material>

To 2.67 g of the polyamic acid resin solution $S_1$ obtained in Synthesis Example 1, 0.174 g of chloroauric acid tetrahydrate dissolved in 17.33 g of DMAc was added, and the solution was stirred for 15 minutes at room temperature in a nitrogen atmosphere, to prepare a polyamic acid resin solution containing a gold complex. The obtained polyamic acid resin solution containing a gold complex was coated on the glass substrate G2 obtained in Fabrication Example 2 by using a spin coater (SPINCOATER 1H-DX2 manufactured by Mikasa Co., Ltd.), and then dried for 3 minutes at 70°C and for 20 minutes at 130°C, to form a polyamic acid resin film containing a gold complex with a thickness of 50 nm on the glass substrate G2. The polyamic acid resin film containing a gold complex was subjected to heat treatment for 10 minutes at 300°C in atmosphere, to fabricate a red nanocomposite film 2-1 (with a thickness of 30 nm) dispersed with metal gold microparticles. The metal gold microparticles formed in the nanocomposite film 2-1 were completely independent in a region in a thickness direction from a surface portion of the film, and were dispersed with a spacing between adjacent metal gold microparticles of greater than and equal to a particle diameter of a larger one of the adjacent metal gold microparticles. In addition, the metal gold microparticles also are present in the range of 0 nm to 50 nm from a plane of a surface side of the film. In addition, the metal gold microparticles formed in the film have the following characteristics:

> Shape: substantially spherical shape; mean particle diameter: about 4.2 nm; minimum particle diameter: about 3.0 nm, maximum particle diameter: about 9.8 nm, volume fraction relative to the nanocomposite film 2-1: 1.35%; and mean interparticle distance: about 17.4 nm.

In addition, in the LSPR absorption spectrum generated by the metal gold microparticles by the metal gold particles in the nanocomposite film 2-1, an absorption peak with a crest of 544 nm and a half-value width at 78 nm was observed.

<Etching step of the nanocomposite material>

A region from a plane of a surface side of the nanocomposite film 2-1 to the thickness of 7 nm was removed through plasma etching by using a vacuum plasma device (plasma cleaner VE-1500II, manufactured by Mory Engineering Co. Ltd.), to obtain a nanocomposite film 2-1'. It was confirmed that a part of the metal gold microparticles were exposed from the plane of the surface side of the film, and the average value of the diameter of the exposed area of the metal gold microparticles was about 3.8 nm. In addition, relative to the surface area of the nanocomposite film 2-1' at this time, the total area fraction of the exposed portion of the metal gold microparticles was 1.08%. In addition, in the LSPR absorption spectrum generated by the metal gold microparticles in the nanocomposite film 2-1', an absorption peak with a crest of 525 nm and a half-value width at 68 nm was observed.

<Step of immobilizing the bonded chemical species>

Next, the nanocomposite film 2-1' was impregnated in a 1 mM ethnaol soluition of 3-mercaptopropyltrimethoxysilane (KBM-803, Shin-Etsu Silicones) that serves as a bonded chemical species, and after 2-hour treatment at -6°C, washed with ethanol. Then, the nanocomposite film 2-1' was impregnated in 100 mM potassium hydroxide solution, and after 30-second treatment at 23°C, washed with pure water, so as to fabricate a nanocomposite film 2-1" with the bonded chemical species immobilized at the exposed portion of the metal gold microparticles.

<Validiation of the effect of the nanocomposite film 2-1">

The nanocomposite film 2-1" that was washed with ethanol in adance was impregnated in the collodial silicon oxide with solid contents of a concentration of 1% in Fabrication Example 3, and after 2-hour stirring treatment at 23°C, washed with ethanol and dried, and silica nanoparticles were added at an exposed side of the metal gold microparticles in the nanocomposite film 2-1". Through surface observation by using an FE-SEM, it was observed by the results that the silica nanoparticles with the particle diameter 40 nm to 50 nm were not coagulated and immobilized on the surface of the nanocomposite film 2-1" in a substantially unform dispersion state. In addtion, through cross-section observation by using a TEM, it was observed by the results that the silica nanoparticles were immobilized by substantially contacting with the upper side of the exposed portion of the metal gold microparticles.

Reference Example 1

An Au film with the thickness of about 20 nm was formed on a single surface of an alkali-free glass (AN-100 manufactured by Asahi Glass Co., Ltd) test piece with a size of 1 cm x 3 cm (with a thickness of 0.7 mm) through vacuum evaporation. Next, in the same manner as that in Example 2-1, the Au film was treated by using 3-mercaptopropyltrimethoxysilane was performed, and then, treated by using a collodial silicon oxide solution. Through surface observation of the fabricated test sheet by using an FE-SEM, as a result, it was observed coagulation of the silica nanoparticles occurred at several sites, and the silica nanoparticles were immobilized on the surface of the test sheet in a non-uniform state.

[Example 2-2]

In a manner the same as that in Example 2-1, a nanocomposite film 2-2' with a portion of metal gold microparticles exposed was obtained.

Next, the nanocomposite film 2-2' was impregnated in a 0.1 mM ethanol solution of biotinylated thiol (trade name: FT003, chemical structure: HS-$(CH_2)_{11}$-NH-C(O)-Biotin, manufactured by Altech Corporate) that serves as a bonded chemical species, and after 2-hour treatment at -6°C, washed with ethanol. Then, the nanocomposite film 2-2' was washed with a phophate buffer (a mixed aqueous solution of 150 mM sodium chloride, 7.5 mM disodium hydrogen phosphate and 2.9 mM sodium dihydrogen phophate), and then impregnated in a phosphate buffer, so as to fabricate a nanocomposite film 2-2" with the bonded chemical species immoblized at the exposed portion of the metal gold microparticles. In the absorption spectrum of the nanocomposite film 2-2" in the phosphate buffer, an absorption peak with a crest of 530 nm and a half-value width at 70 nm was observed, in which the absorbance at the crest was 0.032.

The nanocomposite film 2-2" was impregnated in the Avidin solution in Fabrication Example 4, after 2-hour stirring treatment at 23°C, washed with a phosphate buffer, and then impregnated in a phosphate buffer, so that the Avidin was adsorbed on the bonded chemical species of the nanocomposite film 2-2". In the absorption spectrum of the nanocomposite film 2-2" in the phosphate buffer, a absorption peak with a crest of 531 nm and a half-value width at 70 nm was observed, in which the absorbance at the crest was 0.035.

[Example 2-3]

Except that 0.522 g of chloroauric acid tetrahydrate dissolved was used, instead of 0.174 g of chloroauric acid tetrahydrate in Example 2-1, in a manner the same as that in Example 2-1, a polyamic acid resin film containing a gold complex with a thickness of 50 nm was formed on the glass substrate. The polyamic acid resin film containing a gold complex was subjected to heat treatment for 10 minutes at 400°C in atmosphere, to fabricate a red nanocomposite film 2-3 (with a thickness of 30 nm) dispersed with metal gold microparticles. The metal gold microparticles formed in the nanocomposite film 2-3 were completely independent, and dispersed with a spacing of greater than and equal to the particle diameter of a larger one of adjacent metal gold microparticles and arranged in a layer. In addition, the metal gold microparticles formed in the layer have the following characteristics:

Shape: substantially spherical shape; mean particle diameter: about 20 nm; minimum particle diameter: about 12 nm, maximum particle diameter: about 26 nm, volume fraction relative to the nanocomposite film 3: 3.96%; and mean interparticle distance: about 25 nm.

In addition, in the LSPR absorption spectrum generated by the metal gold particles in the nanocomposite film 2-3, an absorption peak with a crest of 546 nm and a half-value width at 102 nm was observed.

A region from a plane of a surface side of the nanocomposite film 2-3 to the thickness of 7 nm was removed through plasma etching by using a vacuum plasma device (plasma cleaner VE-1500II manufactured by Mory Engineering Co. Ltd.), to obtain a nanocomposite film 2-3'.

It was confirmed that a part of the metal gold microparticles were exposed from the plane of the surface side of the film, and the average value of the diameter of the exposed area of the metal gold microparticles was about 17.9 nm. In addition, relative to the surface area of the nanocomposite film 2-3' at this time, the total area fraction of the exposed portion of the metal gold microparticles was 5.1%. In addition, in the LSPR absorption spectrum generated by the metal gold microparticles in the nanocomposite film 2-3', an absorption peak with a crest of 528 nm and a half-value width at 80 nm was observed.

Next, the nanocomposite film 2-3' was treated by using biotinylated thiol through a method the same as that in Example 2-2, to obtain a nanocomposite film 2-3". In the absorption spectrum of the nanocomposite film 2-3" in a phosphate buffer, an absorption peak with a crest of 534 nm and a half-value width at 80 nm was observed, in which the absorbance at the crest was 0.131.

The nanocomposite film 2-3" was treated by using the avidin solution through a method the same as that in Example 2-2. In the absorption spectrum of the nanocomposite film 2-3" in a phosphate buffer, an absorption peak with a crest of 536 nm and a half-value width at 80 nm was observed, in which the absorbance at the crest was 0.140.
The embodiments of the present invention are described in detail for illustration, but the present invention is not limited thereto, and various modifications can be made. The present international application claims priority to Japanese Patent Application No. 2010-64097 filed on March 19, 2010 and Japanese Patent Application No. 2010-82409 filed on March 31, 2010, which are incorporated herein by reference in their entireties.

[List of Reference Numerals]

1: Matrix resin, 3: Metal microparticles, 5: Metal microparticle layer, 10, 10a: Nanocomposite material, 20: Nanocomposite material, S: Surface

## Claims

1. A metal microparticle composite, comprising a film-shaped matrix resin and metal microparticles immobilized in the matrix resin, and comprising following structures 1a to 1d:

    1a) the metal microparticles are obtained by reducing metal ions or metal salts contained in the matrix resin or a precursor resin thereof;
    1b) particle diameters of at least 90% of all the metal microparticles are in a range of 10 to 80 nm;
    1c) in a range from a surface of the matrix resin to a depth of 150 nm, a plurality of metal microparticles are dispersed in a plane direction parallel to the surface of the matrix resin to form a metal microparticle layer, and in the metal microparticle layer, merely one metal microparticle with the particle diameter specified in b) is present in the depth direction; and
    1d) a spacing between adjacent metal microparticles is greater than and equal to the particle diameter of a larger one of the adjacent metal microparticles.

2. The metal microparticle composite according to claim 1, wherein relative to the metal microparticle composite, a volume fraction of the metal microparticles is in a range of 0.05% to 23%.

3. The metal microparticle composite according to claim 1 or 2, further comprising a following structure 1e:

    1e) the metal microparticles interact with light having a wavelength of greater than and equal to 380 nm for generating local surface plasmon resonance.

4. The metal microparticle composite according to any one of claims 1 to 3, wherein a part of the metal microparticles are exposed from the surface of the matrix resin.

5. The metal microparticle composite according to any one of claims 1 to 4, wherein a thickness of the metal microparticle layer is in a range of 20 nm to 150 nm.

6. The metal microparticle composite according to any one of claims 1 to 5, wherein the matrix resin comprises a polyimide resin.

7. The metal microparticle composite according to claim 6, wherein the polyimide resin is transparent or colorless.

8. A metal microparticle composite, comprising a matrix resin and metal microparticles immobilized in the matrix resin, and further comprising the following structures 2a to 2e:

    2a) the metal microparticles are obtained by reducing metal ions or metal salts contained in the matrix resin or a precursor resin thereof;
    2b) particle diameters of the metal microparticles are in a range of 1 nm to 100 nm, and a mean particle diameter is greater than and equal to 3 nm;
    2c) the metal microparticles do not contact with each other and are present with a spacing of greater than and equal to the particle diameter of a larger one of the adjacent metal microparticles;
    2d) at least a part of the metal microparticles have a portion embeded in the matrix resin and a portion exposed

out of the matrix resin, and the exposed portion has a bonded chemical species immobilized thereon; and
2e) the bonded chemical species immobilized on the metal microparticles has a functional group that interacts with a specific substance.

**9.** The metal microparticle composite according to claim 8, wherein the particle diameters of at least 90% of all the metal microparticles are in a range of 10 to 80 nm, and in a range from a surface of the matrix resin to a depth of 100 nm, the metal microparticles are dispersed in a plane direction parallel to the surface of the matrix resin to form a metal microparticle layer, and in the metal microparticle layer, merely one metal microparticle with the particle diameter in the range of 10 to 80 nm is present in the depth direction.

**10.** The metal microparticle composite according to claim 9, wherein a thickness of the metal microparticle layer is in a range of 20 to 100 nm.

**11.** The metal microparticle composite according to claim 8 or 9, wherein the metal microparticles interact with a light having a wavelength of greater than and equal to 380 nm for generating local plasmon resonance.

**12.** The metal microparticle composite according to claim 8 or 9, wherein the matrix resin comprises a polyimide resin.

**13.** The metal microparticle composite according to claim 12, wehrein the polyimide resin is transparent or colorless.

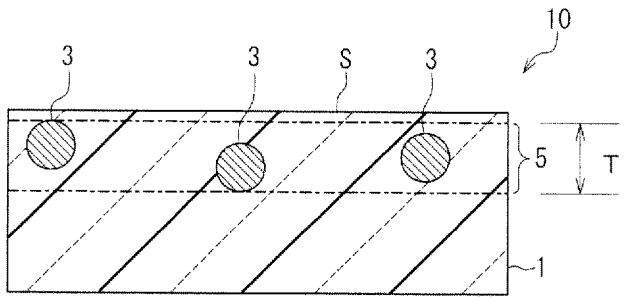


FIG. 1

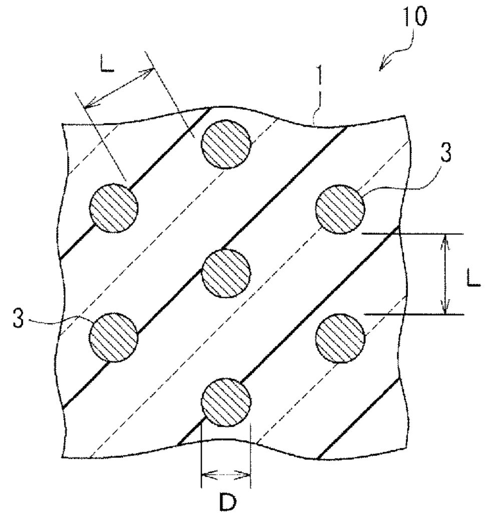


FIG. 2

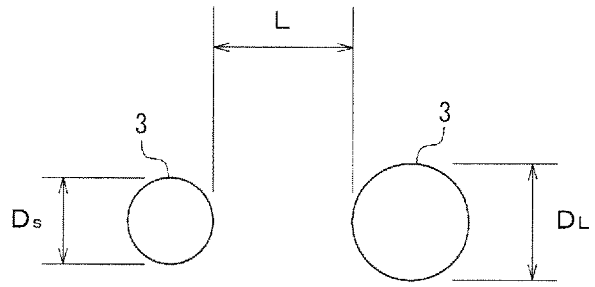


FIG. 3

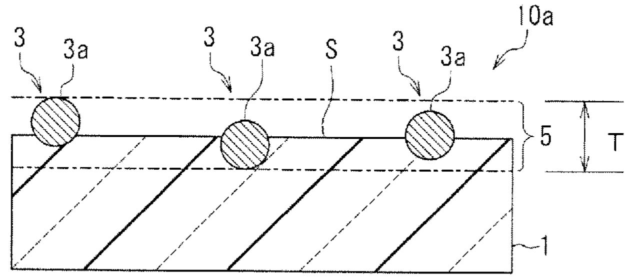


FIG. 4

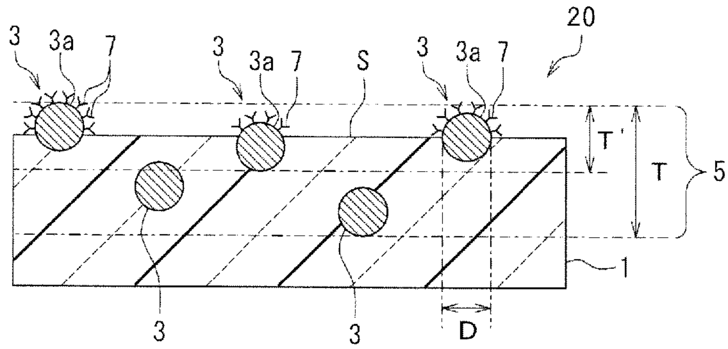


FIG. 5

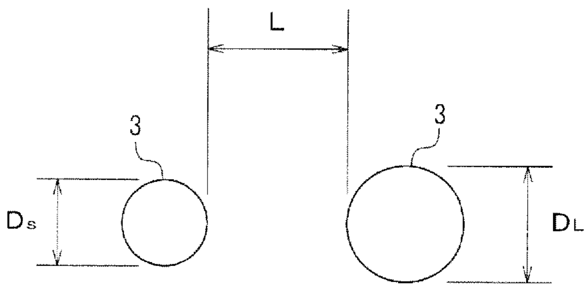


FIG. 6

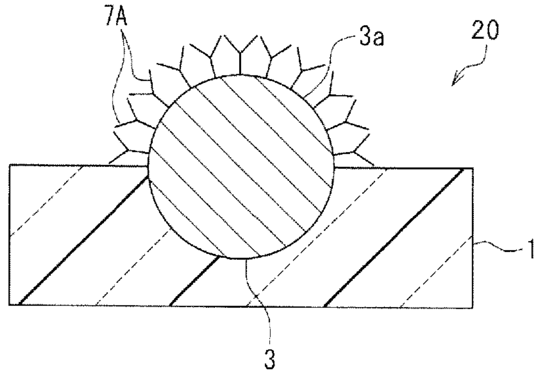


FIG. 7

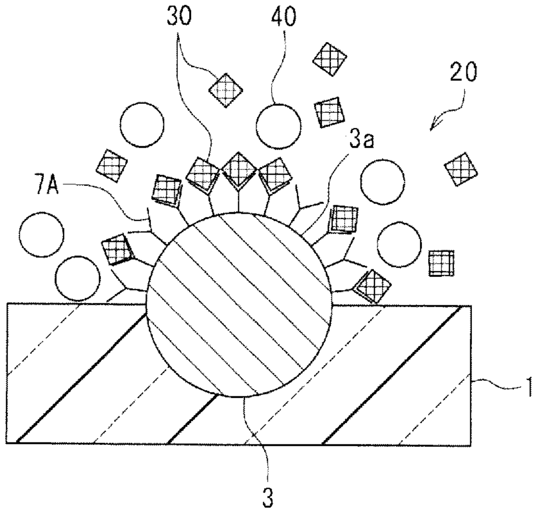


FIG. 8

## INTERNATIONAL SEARCH REPORT

International application No.
PCT/JP2011/052608

A. CLASSIFICATION OF SUBJECT MATTER
*C08J5/18*(2006.01)i, *B82B1/00*(2006.01)i, *B82B3/00*(2006.01)i, *C08K3/08* (2006.01)i, *C08L79/08*(2006.01)i, *C08L101/00*(2006.01)i, *G01N21/27* (2006.01)i

According to International Patent Classification (IPC) or to both national classification and IPC

B. FIELDS SEARCHED

Minimum documentation searched (classification system followed by classification symbols)
C08J5/00-5/02, C08J5/12-5/22, B82B1/00-3/00, C08K3/00-13/08, C08L1/00-101/14, G01N21/00-21/01, G01N21/17-21/74

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2007/122998 A1 (Japan Science and Technology Agency), 01 November 2007 (01.11.2007), claims; paragraphs [0023] to [0041] & US 2009/0087582 A1 & EP 2003091 A2 & CN 101432224 A & KR 10-2009-0028503 A | 1-4<br>8,9,11<br>5-7,10 |
| Y | JP 2006-030155 A (Yukio NAGASAKI), 02 February 2006 (02.02.2006), claims (Family: none) | 8,9,11-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 February, 2011 (25.02.11) | 26 April, 2011 (26.04.11) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/052608

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-277397 A (National Institute of Advanced Industrial Science and Technology), 25 September 2002 (25.09.2002), claims; paragraphs [0016], [0017], [0021], [0026] to [0031] & US 6707549 B2 | 8,11-13 |
| Y | JP 2010-053442 A (Kyushu University), 11 March 2010 (11.03.2010), claims; paragraph [0044] (Family: none) | 12,13 |
| A | JP 2005-049297 A (National Institute of Advanced Industrial Science and Technology), 24 February 2005 (24.02.2005), entire text (Family: none) | 1-13 |
| A | JP 2010-038648 A (Toshiba Corp.), 18 February 2010 (18.02.2010), entire text (Family: none) | 1-13 |
| A | JP 2004-020822 A (National Institute of Advanced Industrial Science and Technology), 22 January 2004 (22.01.2004), entire text & US 2004/0048075 A1 | 1-13 |

Form PCT/ISA/210 (continuation of second sheet) (July 2009)

**INTERNATIONAL SEARCH REPORT**

International application No.
PCT/JP2011/052608

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

INTERNATIONAL SEARCH REPORT

International application No.
PCT/JP2011/052608

Continuation of Box No.III of continuation of first sheet(2)

The technical feature common to the invention of claim 1 and the invention of claim 8 is "a fine metal particle composite body comprising a matrix resin and fine metal particles fixed to the matrix resin, which is characterized by having the following configurations: the fine metal particles are obtained by reducing metal ions or a metal salt contained in the matrix resin or a precursor resin thereof; the fine metal particles have an average particle diameter of not less than 3 nm; and the distance between adjacent fine metal particles is not less than the particle diameter of the larger of the adjacent fine metal particles".

The common technical feature, however, cannot be considered as a special technical feature since it does not make a contribution over the prior art in view of the disclosure of documents 1 and 2. In addition, there is no other same or corresponding special technical feature between those inventions.

Consequently, the claims of this international application are considered to contain the following two (groups of) inventions.

(Invention group 1) the inventions of claims 1-7

A fine metal particle composite body comprising a film-like matrix resin and fine metal particles fixed to the matrix resin, which is characterized by having the configurations 1a-1d

(Invention group 2) the inventions of claims 8-13

A fine metal particle composite body comprising a matrix resin and fine metal particles fixed to the matrix resin, which is characterized by having the configurations 2a-2e

<Document List>

Document 1: WO 2007/122998 A1 (Japan Science and Technology Agency), 1 November 2007 (01.11.2007), claims, paragraphs [0023]-[0041] (See example 1, especially)

Document 2: JP 2002-277397 A (National Institute of Advanced Industrial Science and Technology), 25 September 2002 (25.09.2002), claims, paragraphs [0016], [0017], [0021], [0026]-[0031]

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI0816177 B
- JP 3846331 B
- JP 4280221 B
- JP 2000290642 A
- JP 2919612 B
- JP 2002179931 A
- JP 2009058263 A
- JP 2006234472 A
- JP 2000356587 A
- JP 2010064097 A
- JP 2010082409 A